# EUROPÄISCHE PATENTSCHRIFT

(11) **EP 0 938 360 B1**
(45) Veröffentlichungstag und Bekanntmachung des Hinweises auf die Patenterteilung: **28.08.2002**
(21) Anmeldenummer: 97913184.4
(22) Anmeldetag: 29.10.1997
(51) Int. Cl.: B01D 35/04, B01D 53/04, B01D 53/26

(54) **ADSORPTIONSTROCKNERANLAGE UND VERFAHREN ZU IHRER FUNKTIONSÜBERPRÜFUNG**
ADSORPTION DRYING UNIT AND PROCESS FOR CHECKING THE OPERATING STATE OF SAME
INSTALLATION DE SECHAGE PAR ADSORPTION ET PROCEDE DE VERIFICATION FONCTIONELLE

(30) Priorität: 31.10.1996 DE 19645007; 28.02.1997 DE 19710305
(43) Veröffentlichungstag der Anmeldung: 01.09.1999
(73) Patentinhaber: ultrafilter international AG, 42781 Haan (DE)
(72) Erfinder: EIMER, Klaus, D-40883 Ratingen (DE); SCHUSTER, Hans-Michael, D-42781 Haan (DE); PATZIG, Dieter, D-40882 Ratingen (DE); BEHRENDT, Matthias, D-45259 Essen (DE)
(74) Vertreter: König, Reimar .
(86) Internationale Anmeldenummer: EP9705965
(87) Internationale Veröffentlichungsnummer: WO98018538

(56) Entgegenhaltungen:
- EP-A- 0 168 336
- EP-A- 0 288 931
- DE-A- 2 818 855
- DE-A- 3 901 779
- US-A- 4 127 395
- US-A- 4 504 286
- US-A- 4 718 020
- US-A- 5 215 555

## Beschreibung

Adsorptionsfraktionierung wird insbesondere beim Trocknen von Druckluft angewandt. Druckluft ist ein Energieträger für Produktionsprozesse. Moderne Produktionsmethoden und Prozeßabläufe stellen immer höhere Anforderungen an die Druckluftqualität. Es genügt heutzutage nicht mehr, eine bestimmte Menge Druckluft bereitzustellen, sondern die Druckluft muß auch definierten Reinheitskriterien genügen. Dabei steht die Forderung nach trockener, sauberer Druckluft im Vordergrund. Bei der Adsorptionsfraktionierung lagern sich Wassermoleküle aus der Luft an ein Adsorbens an.

Eine Vorrichtung zum Adsorbtionsfraktionieren wird beispielsweise in der Schrift "Trockene Druckluft. Mit Sicherheit ein reiner Gewinn." der Firma Ultrafilter GmbH, Büssingstraße 1, D-42781 Haan, beschrieben. Die Schrift trägt die Kennzeichnung T.997.004.03.D 10.95. Mit der Vorrichtung kann Druckluft kontinuierlich getrocknet werden. Dazu weist die Vorrichtung zwei mit Adsorbens gefüllte Behälter auf. Beim Betrieb der Vorrichtung durchströmt feuchte Luft einen der Behälter und wird dabei getrocknet, während gleichzeitig ein Teil der in dem Behälter getrockneten Luft in den anderen Behälter geführt wird und dort in umgekehrter Strömungsrichtung das Adsorbens regeneriert, d. h. Wassermoleküle von dem Adsorbens aufnimmt. Die auf diese Weise wiederbefeuchtete Luft entspannt sich bei der Regenerierung und wird an die Umgebung entlassen.

Eine andere Vorrichtung zum Adsorptionsfraktionieren von Gasen wird in der EP 0 168 336 B1 beschrieben. Die Schrift weist zahlreiche Informationen zu Details der Adsorptionstechnik auf, etwa zur Prozeßsteuerung.

Die Montagekosten für den Aufbau solcher Vorrichtungen tragen erheblich zu deren Kosten bei. Dabei hängen die Kosten von der Anzahl einzeln zusammenzusetzender Bauteile und deren Herstellungskosten ab. Weiterhin werden Kosten ebenfalls verursacht, wenn eine Betriebsüberprüfung der Vorrichtung mittels beispielsweise einer Funktionsüberwachung gewährleistet sein soll. Die dazu notwendigen Bauteile sind ebenfalls an der Anlage anzumontieren, wobei die Anzahl der Bauteile wesentlich von der Art der Betriebsüberprüfung abhängt. Dazu sind im Stand der Technik verschiedene Techniken bekannt, die mehr oder minder aufwendig sind und gewissen Sicherheitsaspekten genügen sollen.

Aus der US 4,127,395 ist eine Probenentnahmevorrichtung bekannt, mittels derer ein Feuchtesensor auf seine Funktionsfähigkeit überprüft werden kann. Wird ein Ausfall dieses Feuchtesensors ermittelt, kann die Adsorptionstrockneranlage automatisch in einen zeitgesteuerten Betrieb umgestellt werden. Die Funktion dieser Probeentnahmevorrichtung erfordert mehrere Leitungen zusätzlich an der Adsorptionstrockneranlage. Aus der US 4,504,286 wiederum werden eine Vorrichtung und ein Verfahren bezüglich einer Kontrolle des Umschaltens zwischen zwei Adsorbensbehältern offenbart, wobei bei Ausfall der eigentlichen Feuchteüberwachung trotzdem umgeschaltet wird. Dieses wird durch einen Vergleich der maximalen Speicherfähigkeit eines Adsorbensbettes mit dem Zeitintegral des dort durchgeströmten Wassers prozessorgesteuert erzielt. Zur Messung des durchgeströmten Wasseranteiles wird neben anderen Bauteilen ein Feuchtigkeitsanalysator eingesetzt.

In der Praxis wiederum ist manchmal zu beobachten, daß während der Wartung bei vermuteten Störungen bei der Adsorptionstrockneranlage überprüft wird, ob das wechselseitige Ablassen der Regenerationsluft akustisch oder durch Beobachtung zweier an den Adsorberbehältern angebrachten Manometern festzustellen ist. Als mögliche Fehlerquellen kommen dabei die Wechselventile, Ablaßventile sowie Überströmkanäle für Regenerationsluft in Frage. Eine genaue Angabe des Fehlers oder gar der Fehlerquelle lassen insbesondere ältere Adsorptionstrockneranlagen anlagenbedingt jedoch nicht zu. Vermutete Störungen an der Adsorptionstrockneranlage werden daher aufgrund der Art der Überprüfung erst dann genauer untersucht, wenn es schon zu auffälligen Qualitätseinbußen bei der aufbereiteten Druckluft kommt.

Der vorliegenden Erfindung liegt die Aufgabe zugrunde, eine Vorrichtung zum kontinuierlichen Adsorptionsfraktionieren eines Gases anzugeben, die einen geringen Herstellungs- und Montageaufwand erfordert und insbesondere eine Integration einer sicheren Funktionsüberprüfung ohne hohen zusätzlichen Aufwand ermöglicht. Weiterhin soll eine Funktionsüberprüfungsvorrichtung geschaffen werden, die wenige Bauteile und damit einen geringen Herstellungs- und Montageaufwand erfordert, so daß eine Integration in eine Vorrichtung zum kontinuierlichen Adsorptionsfraktionieren ohne hohen Aufwand möglich sein soll. Eine weitere Aufgabe der Erfindung ist es, ein Verfahren zur sicheren Überprüfung der Funktionsfähigkeit einer Adsorptionstrockneranlage zu schaffen, das auch nachträglich noch ohne allzu hohen Aufwand bei einer Vorrichtung zum kontinuierlichen Adsorptionsfraktionieren anzuwenden und insbesondere auch noch zu integrieren ist, wobei eine hohe Zuverlässigkeit der Funktionsüberprüfung gewährleistet sein soll. Insbesondere sollen Vorrichtung, Funktionsüberprüfungsvorrichtung und Verfahren so aufeinander abstimmbar sein, daß sie ihre jeweiligen Vorteile bezüglich eines geringen Bauteilebedarfes sowie Herstellungsaufwandes miteinander vorteilhaft verbinden können.

Diese Aufgabe wird erfindungsgemäß gelöst durch eine Vorrichtung gemäß Anspruch 1 und mit einem Verfahren gemäß Anspruch 27. Vorteilhafte Weiterbildungen sind in den jeweils abhängigen Ansprüchen angegeben.

Bei einer Vorrichtung zum kontinuierlichen Adsorptionsfraktionieren eines Gases werden ein Gaseinlaß, ein Gasauslaß und ein Nebenstromauslaß zu einem gemeinsamen Funktionsblock geführt, wobei eine Leitungsverschaltung des Gaseinlasses und des Gasauslasses von bzw. zu den Behältern mit einem ersten und einem zweiten Wechselventil sowie weitere Bauteile in einem vorgefertigten Funktionsblock integriert sind. Der Funktionsblock kann in einer Fabrik vorgefertigt und geprüft werden, so daß entsprechende Montageschritte am Betriebsort oder bei der Endmontage der Vorrichtung nicht mehr ausgeführt werden müssen. Auch sind dort gegebenenfalls Sollbereiche für einen Meßwert für ein Verfahren zur Funktionsüberprüfung vorab einspeicherbar.

Die Vorrichtung weist mindestens einen Behälterkorpus auf, mit jeweils mindestens einem Behälterhohlraum und jeweils mindestens einem Leitungshohlraum, wobei der Behälterhohlraum zwei an voneinander beabstandeten Außenseiten des Behälterkorpus liegende Hohlraumöffnungen hat. Ein solch kompakter Aufbau erleichtert den Austausch des Adsorbens, insbesondere wenn das Adsorbens in austauschbaren Kartuschen enthalten ist. Der Leitungshohlraum dient der Verbindung des Behälterhohlraumes zum Funktionsblock.

Unter anderem aus Gründen der Reduzierung von Fertigungskosten ist es günstig, wenn der Behälterkorpus extrudiert ist.

Ein Vorteil der vorliegenden Erfindung ist, daß gleiche Funktionsblöcke mit unterschiedlichen Anordnungen von Behältern zu Vorrichtungen kombiniert sein können. So sind beispielsweise Kombinationen mit niedrigen oder hohen Behältern und mit nur zwei oder zwanzig Behältern möglich. Funktionsblöcke für Vorrichtungen können daher im voraus produziert und auf Lager gehalten werden. Eine dazu jeweils passende Steuerung ist durch entsprechende Programmierung bzw. Prozessorauswahl individuell ausgestaltbar, kann aber aufgrund einer Vereinheitlichung des Funktionsblocks zumindest in einer Grundausstattung ebenfalls vereinheitlicht sein. Eine derartige Vereinheitlichung ermöglicht eine Integration von Bauteilen der Steuerung so in die Vorrichtung, daß keine zusätzlichen Anbauteile für diese notwendig werden.

Zum kontinuierlichen Adsorptionsfraktionieren wird mindestens ein Paar von Adsorbens enthaltenden Behältern eingesetzt, nämlich ein erster und ein zweiter Behälter. Bei besonderen Ausgestaltungen der Vorrichtungen kommen weitere mit Adsorbens gefüllte Behälter zum Einsatz. Die Behälteranzahl ist meistens gerade. Bei bestimmten Ausgestaltungen kommen aber auch ungerade Behälteranzahlen vor.

Der erste und der zweite Behälter weisen einen gemeinsamen, über ein erstes Wechselventil verzweigten Gaseinlaß und einen gemeinsamen über ein zweites Wechselventil verzweigten Gasauslaß auf, wobei die beiden Behälter im Bereich des Gasauslasses über eine Bypassleitung verbunden sind. Im Bereich des Gaseinlasses sind die beiden Behälter einzeln absperrbar mit einem Nebenstromauslaß verbunden.

Bei einer bevorzugten Ausgestaltung der Vorrichtung sind der Gaseinlaß und der Nebenstromauslaß miteinander verbunden, wobei der Nebenstromauslaß verzweigt ist und jeweils ein Zweig zu dem ersten und zu dem zweiten Behälter geführt ist. Der Gaseinlaß und der Nebenstromauslaß nutzen gemeinsame Leitungsbauteile, so daß der erste und der zweite Behälter jeweils nur einen Anschluß gemeinsam für den Nebenstromauslaß und den Gaseinlaß haben. Andere Ausgestaltungen weisen eine Mehrzahl von Anschlüssen an den Behältern für Nebenstromauslaß und Gaseinlaß auf. In beiden Zweigen des Nebenstromanschlusses liegt jeweils ein Absperrventil zum einzelnen Absperren der Behälter. Bei einer anderen Variante der Ausgestaltungen werden Dreiwegeventile, beispielsweise an einer Verzweigung im Nebenstromauslaß, verwendet.

Besondere Ausgestaltungen der erfindungsgemäßen Vorrichtung haben einen Vorfilter im Gaseinlaß und/oder einen Nachfilter im Gasauslaß. Vorzugsweise liegen der Vorfilter bzw. der Nachfilter in einer Sammelleitung im Gaseinlaß bzw. im Gasauslaß, wobei die Sammelleitung in Richtung auf die beiden Behälter zu verzweigt wird. Weitere Ausgestaltungen weisen mehrere Vorfilter bzw. Nachfilter in Reihen- und/oder Parallelschaltung und an verschiedenen Stellen im Gaseinlaß bzw. Gasauslaß auf.

Vorzugsweise wird zwischen den Filtern ein Differenzdruckmesser angeordnet, der Aufschluß über den Betriebszustand der Anlage geben kann. Der Differenzdruck kann über Messung eines Druckes in den jeweiligen Sammelleitungen ermittelt werden. Um aber die Kompaktheit der Anlage auszunutzen, wird der Differenzdruckmesser insbesondere so im Funktionsblock angeordnet, daß er direkt auf eine Platine, insbesondere eine Ventilsteuerplatine, wirkt. So kann ein Differenzdruckmesser beispielsweise einen abhängig vom Differenzdruck verschiebbaren Magneten haben, der direkt einen Magnetsensor auf einer Platine beeinflußt. Auch kapazitiv gekoppelte Systeme sind anwendbar. Zusätzliche elektrische Leitungen zur Weitergabe von Impulsen entsprechend dem gemessenen Differenzdruck entfallen und verringeren den Aufwand der Montage des Funktionsblockes. Die direkte Wirkung auf die Platine ermöglicht die dortige Umsetzung in elektrische Signale und deren Weiterverarbeitung in ebenfalls im Funktionsblock integrierten oder an diesem angeschlossenen Bauteilen. Der Differenzdruckmesser kann beispielsweise auch als Meßwertgeber im Rahmen einer Steuerung genutzt werden, wie sie weiter unten noch näher erläutert wird.

Im Bereich des Gasauslasses sind die beiden Behälter über eine Bypassleitung miteinander verbunden. Bei einer günstigen Ausgestaltung setzen Anschlüsse der Bypassleitung an Leitungsteilen des Gasauslasses an. In einer Ausgestaltungsvariante weisen der erste und/oder der zweite Behälter einen von dem Gasauslaß beabstandet liegenden Bypassanschluß auf, wobei der Bypassanschluß jedoch in räumlicher Nähe zum Gasauslaß liegt.

Der Funktionsblock enthält bei einer zweckmäßigen Weiterbildung der Erfindung eine Funktionssteuerung, die beim Betrieb der Vorrichtung Aufgaben der Prozeßsteuerung übernimmt, beispielsweise eine Ventilsteuerung. Mit dieser ist dann auch das Verfahren zur prozessorgesteuerten Überprüfung der Funktionsfähigkeit der Vorrichtung möglich. Insbesondere sind die notwendigen Bauteile für diese Steuerung in den Funktionsblock integrierbar und benötigen kein weiteres zusätzliches Gehäuse.

Bei günstigen Weiterbildungen der Erfindung weist der Funktionsblock einen Gaseinlaßanschluß auf. Der Gaseinlaßanschluß ist über eine im Funktionsblock liegende Anschlußleitung mit einem an dem Funktionsblock befestigten Vorfilter verbunden. Bei einer anderen Weiterbildung weist der Funktionsblock stattdessen oder gleichzeitig einen Gasauslaßanschluß auf, der über eine im Funktionsblock liegende Anschlußleitung mit einem an dem Funktionsblock befestigten Nachfilter verbunden ist. Zweckmäßigerweise werden der Vorfilter bzw. der Nachfilter von dem Funktionsblock gehalten. Besonders günstig sind Vorrichtungen mit einem Vorfilter und einem Nachfilter, die an zwei gegenüberliegenden Außenseiten des Funktionsblocks befestigt sind, vorzugsweise der Vorfilter unten und der Nachfilter oben am Funktionsblock. Bei Vorrichtungen mit wenigstens einem der Filter ist es vorteilhaft, daß der Filter an eine Filterrückstandsableitung angeschlossen ist, die zum Funktionsblock geführt ist. So können Filterrückstände, beispielsweise Öl oder Wasser, abgeleitet werden. Vorteilhaft sind auch Varianten dieser Ausgestaltung, bei denen der Funktionsblock eine absperrbare Ablaßvorrichtung enthält, mit der die Filterrückstandableitung verbunden ist. Zweckmäßige Weiterbildungen davon weisen von einer Funktionssteuerung steuerbare Absperrventile auf. Darüber hinaus ist die Verwendung von Filterrückstandssammlern sinnvoll, die am Filter und/oder am Funktionsblock mit der Filterrückstandsableitung verbunden sind.

Wie bereits beschrieben, enthält der Funktionsblock Leitungen oder Leitungsteile. Günstig ist es, wenn der Funktionsblock mindestens ein Kanalformbauteil mit kanalartigen Aussparungen aufweist. Durch ein solches Kanalformbauteil bzw. durch Zusammensetzen mehrerer solcher Kanalformbauteile werden kanalartige Leitungen gebildet. Die Kanalformbauteile können kostengünstig hergestellt werden, beispielsweise in einem Spritzgußverfahren. In verschiedenen Ausgestaltungsvarianten werden mit einem solchen Kanalformbauteil ein oder mehrere Leitungen ganz oder teilweise gebildet. Besonders günstig ist ein Kanalformbauteil mit einer Kanalverzweigung, an der das Kanalformbauteil eine Aussparung zur Aufnahme eines Ventils, insbesondere eines Wechselventils aufweist. In diese Leitungen sind dann auch der oder die Meßwertaufnehmer bzw. der oder die Sensoren integrierbar, die für eine Meßwertaufnahme bzw. Betriebsparameteraufnahme benötigt werden. Beispielsweise kann dies ein Sensor sein, der einen Luftvolumenstrom mißt. Allerdings kann ein solcher Sensor auch an einem anderen Ort, beispielsweise an dem Gaseinlaßanschluß, angeordnet sein. Bevorzugt werden Weiterbildungen bei denen das Kanalformbauteil mindestens zwei Kanäle aufweist, die innerhalb des Kanalformbauteils keine Verbindung zueinander haben. Eine solche Integration mehrerer Leitungen bzw. Leitungsteile in ein Bauteil vereinfacht Herstellung und Montage der Vorrichtung erheblich. Zweckmäßige Weiterbildungen weisen weitere Aussparungen in dem Formbauteil auf, z. B. zur Aufnahme oder zur Befestigung einer Funktionssteuerung, von Bedien- und Anzeigeelementen und/oder von Teilen eines Filters.

Bei einer vorteilhaften Ausgestaltung der Vorrichtung sind das erste und/oder das zweite Wechselventil passive Wechselventile, deren Ventilzustand durch die Druckverhältnisse am Ventil bestimmt ist. Passive Wechselventile benötigen keine Ventilsteuerung, wodurch sich eine Steuerung der Vorrichtung vereinfachen läßt. Zweckmäßigerweise liegen das erste und/oder das zweite Wechselventil an der Verzweigung einer Sammelleitung und erlauben gleichzeitig einen Gasstrom von der Sammelleitung nur in einen Teil der Zweigleitungen. Die genannten Leitungen sind jeweils als Ort für die Anordnung von Meßwertaufnehmern bzw. Sensoren geeignet.

Das Absperren der beiden Behälter gegen einen entfernt von ihnen liegenden Ausgang des Nebenstromauslasses erfolgt durch ein oder, vorzugsweise durch pro Behälter ein elektronisch steuerbares Auslaßventil. Beides ermöglicht beispielsweise eine zentrale elektronische Betriebssteuerung der Vorrichtung. Günstig ist es, wenn das bzw. die elektronisch steuerbaren Auslaßventile eine Elektronikeinheit aufweisen, die an dem bzw. den Auslaßventil(en) gehaltert ist. Dadurch wird von dem bzw. den Ventilen eine Tragefunktion für die Elektronikeinheit übernommen. Die Ventile wiederum werden üblicherweise aufgrund eines festen Einbaus von einer Leitung bzw. Leitungsbauteilen getragen. Ein zusätzliches Befestigen der Elektronikeinheit ist somit nicht erforderlich. Die zum Nebenstromauslaß zugeordneten Leitungen eignen sich ebenfalls als weiterer Ort für die Anordnung von Meßwertaufnehmern bzw. Sensoren.

Eine weitere Möglichkeit der Betriebssteuerung ergibt sich ebenfalls unter Ausnutzung von Meßwerten aus den Leitungen der Nebenstromauslässe bzw. deren oder anderer Auslaßöffnungen bzw. Leitungen, wie z. B. einem Gasauslaßanschluß. Durch Anbringung von Massenstromsensoren wird der Durchfluß gemessen. Aus diesem kann auf den Druck geschlossen werden, wenn der funktionale Zusammenhang zwischen Druck und Massenstrom aufgrund des Betriebes der Anlage bekannt ist. Dieser funktionale Zusammenhang ist beispielsweise bei gleichbleibender Temperatur annähernd eine Konstante, auf die vorzugsweise aus einer Speichereinheit zurückgegriffen werden kann. Wird der Massenstrom geringer, so fällt auch der Druck ab, wobei bei Überschreiten einer gewissen Grenze beispielsweise ein entsprechendes Signal ausgelöst wird, das einen notwendigen Filterwechsel anzeigt.

Auch ermöglicht die Überwachung des Druckes eine Funktionsüberwachung der Anlage, ob beispielsweise ein Umschalten zwischen zwei Behältern ohne Fehlfunktion ausgeführt wurde. Schließt oder öffnet ein Ventil nur teilweise, ist diese Art der Funktionsüberprüfung in der Lage, anhand des geringeren Massenstromes als eigentlich erwartet, festzustellen, daß ein Fehler vorhanden ist, wobei bei mehreren Sensoren auch der Fehlerort festzustellen ist. Diese Funktionsüberprüfung kann daher auch als eigenständige, unabhängige Funktionsüberwachung eingesetzt werden, die auch nachträglich noch an einer Austrittsöffnung für einen aus der Anlage ausströmenden Massenstrom nachgerüstet werden kann, sofern sie nicht dort oder in eine der angeschlossenen Leitungen integriert ist. Bevorzugte Anwendung findet diese Funktionsüberwachung in kleineren Anlagen mit beispielsweise zwei Behältern kleiner Ausführung, wie sie beispielsweise in einer Zahnarztpraxis eingesetzt werden.

Bei einer Weiterbildung der Vorrichtung weist der Funktionsblock an einer Außenseite mindestens ein Anzeigeelement auf, an dem z. B. ein Ventilzustand oder ein Gasdruckwert ablesbar ist, insbesondere eine Druckdifferenz. Der Ventilzustand gibt beim Betrieb der Vorrichtung eine wesentliche Information über den gesamten Betriebszustand, z. B. darüber, in welchem Behälter gerade Gas getrocknet wird und in welchem Behälter gerade Adsorbens regeneriert wird. Ein Gasdruckwert, insbesondere eine Druckdifferenz, gibt weitere Betriebsinformationen wieder. Beim Vorhandensein eines Vorfilters und/oder eines Nachfilters kann mit Hilfe der Druckdifferenz zwischen zwei Filteranschlüssen entschieden werden, ob ein Auswechseln des Filtermittels erforderlich ist. Die so gewonnenen Betriebswerte können auch als Betriebsparameter für die Auswahl eines vorgebbaren Sollbereiches genutzt werden.

Bevorzugt werden Ausgestaltungen der Vorrichtung, bei denen das mindestens eine Paar von Behältern über ein System von vier Busleitungen mit dem Funktionsblock verbunden ist. Die Busleitungen sind gebündelt oder separat voneinander angeordnet. Zwei Busleitungen sind Teil des Gaseinlasses und die zwei anderen Teil des Gasauslasses, wovon je eine mit dem ersten Behälter und je eine mit dem zweiten Behälter verbunden ist. Bei Ausgestaltungen mit weiteren Behältern sind auch diese Behälter an das System angeschlossen.

Bei einer Ausgestaltung mit einem System von vier Busleitungen und mit einem Behälterkorpus, der Leitungshohlräume aufweist, sind Verbindungen zwischen den Busleitungen und entsprechenden Leitungshohlräumen vorhanden, die beispielsweise durch Anbohren, Anschneiden oder Anstechen des Behälterkorpus, hergestellt wurden.

Im allgemeinen sind jedem Behälterhohlraum mindestens zwei Leitungshohlräume zugeordnet. Bei einer bevorzugten Weiterbildung ist ein Leitungshohlraum gasdicht mit einer Gassperre in zwei Teilhohlräume unterteilt, wobei sich jeder Teilhohlraum von der Gassperre zu einer Hohlraumöffnung erstreckt. Somit reicht es aus, daß jedem Behälterhohlraum nur ein, unterteilter, Leitungshohlraum zugeordnet ist.

Bei einer weiteren Weiterbildung weist der Behälterkorpus zwei Behälterhohlräume und zwei Leitungshohlräume auf, die beide wie beschrieben mit einer Gassperre unterteilt sind. Die vier Hohlräume sind langgestreckt und ungefähr parallel zueinander angeordnet. Diese Weiterbildung bietet ein hohes Maß an Integration von Bauteilen und erlaubt damit eine kostengünstige Fertigung der erfindungsgemäßen Vorrichtung.

Zweckmäßig ist es, wenn die Vorrichtung an den beabstandeten Außenseiten des Behälterkorpus einen Hohlraumverbinder aufweist, vorzugsweise an den beiden beabstandeten Außenseiten je einen Hohlraumverbinder, wobei der Hohlraumverbinder den mindestens einen Behälterhohlraum mit einem Leitungshohlraum verbindet. Ein solch modularer Aufbau zur Bildung und Verbindung von Behältern bietet fertigungstechnische Vorteile.

Besonders zweckmäßig ist es, wenn der Hohlraumverbinder ein den Behälterhohlraum an der Behälterhohlraumöffnung zur Behälterumgebung gasdicht abschließendes Schließmittel, z. B. ein Deckel oder ein Boden ist. Ein zusätzliches Schließbauteil ist damit nicht mehr erforderlich.

Günstig ist weiterhin eine Ausgestaltung, bei der der Hohlraumverbinder ein das Gewicht des Behälterkorpus tragender Fuß ist.

Entprechend einem weiteren Gedanken der Erfindung weist ein Verfahren zum Kontinuierlichen Adsorptionsfraktionieren mit einer prozessorgesteuerten Überprüfung der Funktionsfähigkeit der Adsorptionstrockneranlage, bei der die Regeneration über einen Regenerationsgasstrom erfolgt, die folgenden Schritte auf:
- es wird ein Meßwert aufgenommen, der in funktionaler Beziehung zum Regenerationsgasstrom steht,
- es erfolgt ein prozessorgesteuerter Vergleich, ob der Meßwert innerhalb eines vorgebbaren Sollbereiches für den Meßwert liegt und
- bei einem außerhalb des Sollbereiches liegenden Meßwert wird ein Signal ausgelöst.

Dieses Verfahren benötigt nur wenige Bauteile, die insbesondere bei einer oben beschriebenen Vorrichtung unter Ausnutzung der Kompaktheit des Funktionsblockes integrierbar sind, ohne zusätzliche Anbauteile an die Vorrichtung zu erfordern. Allerdings ist dieses Verfahren auch nachträglich bei schon existierenden Adsorptionstrockneranlagen einsetzbar, wobei wegen der gegebenenfalls dort schon vorhandenen Bauteile auf weitere Bauteile nicht zurückgegriffen werden muß. Ansonsten kann das Verfahren auch mittels einer nachrüstbaren Funktionsüberprüfungsvorrichtung durchgeführt werden, wie sie weiter unten noch beschrieben wird.

Das Verfahren nutzt die funktionale Beziehung des Meßwertes zum Regenerationsgasstrom, welche über einen Volumenstrom, einen Druck oder auch bei bekannter Dichte über einen Massenstrom entstehen kann. Zulässig sind alle Größen, die auf den Regenerationsgasstrom rückführbar sind. Die Meßwertaufnahme kann auch durch eine kombinierte Messung erfolgen, beispielsweise von Druck und Temperatur oder auch Volumenstrom und Temperatur. Der vorgebbare Sollbereich stellt dann einen maximalen und minimalen Wert zur Verfügung, welche die Grenzen des Sollbereiches ausbilden. Möglich ist auch, daß der Sollbereich aus der Angabe eines einzigen maximalen oder minimalen Wertes besteht. Bei dem prozessorgesteuerten Vergleich wird überprüft, ob der Meßwert innerhalb der Grenzen liegt. Durch die Übernahme des Vergleiches durch den Prozessor ist die Möglichkeit gegeben, eine Fehlfunktion, die sich durch einen außerhalb des Sollbereiches liegenden Meßwert manifestiert, sofort festzustellen. Dadurch wird insbesondere ein Fehler bei der Regeneration eines Behälters der Adsorptionstrockneranlage schnell feststellbar.

Die Aufnahme eines Meßwertes, der in funktionaler Beziehung zum Regenerationsgasstrom steht, erlaubt, die für das Verfahren notwendigen Bauteile ohne hohen Aufwand in eine Adsorptionstrockneranlage zu integrieren. Auch eine nachträgliche Anwendung des Verfahrens an einer Adsorptionstrockneranlage ist ohne zu großen Nachrüstungsaufwand bei schon existierenden Anlagen möglich.

Bei einer Weiterentwicklung des Verfahrens wird der Meßwert in Beziehung zu einem Adsorptionsgasstrom aufgenommen und davon auf die Größe des Regenerationsgasstromes zurückgeschlossen. Dieses ist beispielsweise durch eine Meßwertaufnahme in Strömungsrichtung gesehen nach einem Überströmkanal für den Regenerationsgasstrom vom ersten zum zweiten Behälter möglich. Über den dort vorhandenen Adsorptionsgasstrom, beispielsweise gemessen als Volumenstrom, wird zum Beispiel bei vorgegebener Schaltstellung von Ventilen und/oder Betriebszustand der Adsorptionstrockneranlage darauf zurückgeschlossen, welche Größe der Regenerationsgasstrom in dem Überströmkanal hat. Eine Möglichkeit besteht dabei darin, dieses unter Zuhilfenahme eines bekannten, in die Adsorptionstrockneranlage einströmenden Gasstromes zu ermitteln. Die unmittelbare Feststellung einer Fehlfunktion beim Umschalten der Durchströmung zwischen den beiden Behältern ist erzielbar, wenn der Meßwert und/oder der zeitliche Verlauf des Meßwertes zeitlich zugeordnet zu einem Öffnen oder Verschließen eines Ventiles der Adsorptionstrockneranlage aufgenommen wird. Zeitlich zugeordnet kann dabei bedeuten, daß die Aufnahme des Meßwertes insbesondere kurz vor dem Öffnen, während des Öffnens und/oder nach dem Öffnen bzw. Verschließen des Ventiles erfolgt. Eine Weiterbildung des Verfahrens sieht außerdem vor, daß der Prozessor ein erstes Signal zum Öffnen und/oder Verschließen eines Ventiles gibt, wobei das Durchströmen des Regenerationsgasstromes durch den ersten oder zweiten Behälter freigegeben oder unterbunden wird, und ein zweites Signal zur Aufnahme des Meßwertes. Dadurch ist eine zeitliche Korrelation gegeben, aus der auf die Funktionsweise beispielsweise des Ventiles rückgeschlossen werden kann. Je nach benötigter Reaktionszeit besteht die Möglichkeit, aus den aufgenommenen Werten auf eine spezielle Störquelle zurückzuschließen. Indem der Meßwert mittels des Prozessors aufgenommen und weiterverarbeitet wird, läßt sich das gesamte Verfahren zur prozessorgesteuerten Überprüfung der Funktionsfähigkeit der Adsorptionstrockneranlage automatisieren. Je nach Betrieb der Anlage, wird der Meßwert kontinuierlich und/oder intervallmäßig aufgenommen. In einer Ausführungsform wird der Meßwert nicht nur zeitlich zugeordnet zum Öffnen bzw. Verschließen eines Ventiles der Adsorptionstrockneranlage aufgenommen, sondern auch während des gesamten Betriebes. Dadurch sind auch Störungen aufspürbar, wie sie beispielsweise bei einer Verstopfung einer Leitung auftreten. Die kontinuierliche Meßwertaufnahme ermöglicht, jederzeit über die Funktionsfähigkeit informiert zu sein. Die intervallmäßige Meßwertaufnahme wiederum überprüft in festen oder durch einen Zufallsgenerator vorgegebenen Zeitabständen, inwieweit die Funktionsfähigkeit noch gegeben ist. Sie eignet sich für einen kontinuierlichen, sich nur geringfügig ändernden Betrieb der Adsorptionstrockneranlage besonders. Dieses hat außerdem den Vorteil, daß der Prozessor gleichzeitig auch andere Funktionen wahrnehmen, beispielsweise andere Meßwerte ebenfalls aufnehmen und verarbeiten kann. Ein bevorzugtes Verfahren sieht vor, daß ein erster und ein zweiter Meßwert hintereinander aufgenommen und in Beziehung zueinander gesetzt werden, wobei dem zweiten Meßwert zumindest ein Parameter zugrunde liegt, der gegenüber dem ersten Meßwert verändert wird. Aus einer Funktion zwischen erstem Meßwert, zweitem Meßwert und Parameter wird dann eine Funktionsüberprüfung vorgenommen.

Wird der Volumenstrom ermittelt, so eignet sich seine Feststellung besonders über die Messung eines beheizten, vom Regenerationsgasstrom gekühlten Bauteiles. An der Stelle der Temperaturmessung kann aber ebenfalls auch die Messung eines temperaturabhängigen Widerstandes eines vom Regenerationsgasstrom gekühlten Bauteiles erfolgen.

Eine weitere Ausbildung des Verfahrens sieht vor, daß der vorgebbare Sollbereich fiir den Meßwert eingespeichert wird. Dieses geschieht vorzugsweise als Funktion von mindestens einem Betriebsparameter der Adsorptionstrockneranlage. Die Einspeicherung ermöglicht, daß die Adsorptionstrockneranlage jederzeit in Betrieb gehen kann, ohne daß notwendige Werte für den Sollbereich in einer aufwendigen Prozedur vorab selbst ermittelt werden müßten. Durch die Verknüpfung des Sollbereiches mit mindestens einem Betriebsparameter der Adsorptionstrockneranlage wird in einer vorteilhaften Ausbildung ein Sollbereich abhängig von dem Betriebsparameter aus einer Anzahl von eingespeicherten Sollbereichen ausgewählt. Dadurch ist sichergestellt, daß bei unterschiedlichen Betriebsbedingungen trotzdem immer auch eine sichere Funktionsfähigkeit der Adsorptionstrockneranlage gegeben ist. Die Auswahl des Sollbereiches ist bei einer anderen Ausgestaltung des Verfahrens aber auch manuell durch den Bediener möglich. Dieser gibt entsprechende Betriebsparameter vor, beispielsweise den Betriebsdruck oder auch Durchflußmengen. In einer weiteren Ausführung des Verfahrens wird zumindest während des Betriebes der Adsorptionstrockneranlage entsprechend der Meßwertaufnahme auch der Betriebsparameter über zumindest einen Sensor aufgenommen. Vorteilhafterweise erfolgt dieses zumindest in etwa zeitgleich dazu. Bei Adsorptionstrockneranlagen, die mit häufig oder auch permanent sich ändernden Betriebsparametern betrieben werden, stellt die Sensoraufnahme von zumindest einem Betriebsparameter sicher, daß der Bediener die Adsorptionstrockneranlage einfach und unkompliziert bedienen kann, ohne auf Einstellungen wie den vorgebbaren Sollbereich achten zu müssen. Durch eine prozessorgesteuerte Auswahl des zum Betriebsparameter zugehörigen Sollbereiches ist das Verfahren zur Überprüfung der Funktionsfähigkeit soweit automatisierbar, daß die Adsorptionstrockneranlage quasi kennfeldgesteuert arbeitet. Die Auswahl des Sollbereiches wird zumindest von Zeit zu Zeit überprüft und gegebenenfalls angepaßt. Dieses erfolgt während des Betriebes der Adsorptionstrockneranlage, kann aber auch in Phasen erfolgen, in der eine Art Warmlaufen der Adsorptionstrockneranlage stattfindet.

In einer weiteren vorteilhaften Ausführung des Verfahrens wird bei einem Meßwert außerhalb des Solibereiches aus beispielsweise vorgebbaren Abweichungen mittels des Prozessors auf eine Störquelle geschlossen. Die vorgebbaren Abweichungen können schon, ebenso wie die eingespeicherten Sollbereiche, vorab im Herstellungswerk vorgegeben werden. Je nach Art der Abweichung ist dann der Schluß möglich, ob ein Ventil klemmt oder sich nicht öffnet bzw. schließt. Beispielsweise ist der Regenerationsgasstrom zu klein, wenn ein Ventil nicht ausreichend öffnet bzw. der Überströmkanal verstopft ist. Der Regenerationsgasstrom ist dagegen zu groß, wenn unter Umständen ein Ventil nicht richtig schließt. Durch die Aufnahme und Speicherung der Meßwerte wird in einer Weiterbildung des Verfahrens die zeitliche Aufeinanderfolge derselben analysiert und von diesen ausgehend auf das Verhalten der Adsorptionstrockneranlage in der Zukunft hochgerechnet. Manche Fehlerquellen treten nicht schlagartig sondern schleichend auf. Häufig sind dieses Ansammlungen von Teilchen in Kanälen, die letztendlich zu Verstopfungen führen. Verschleißbedingte Abnutzungserscheinungen sind aber ebenfalls durch eine geeignete Auswertung von langsam sich ändernden Meßwerten aufspürbar.

Wird nun bei einer weiteren, vorteilhaften Ausführungsform des Verfahrens ein Meßwert außerhalb des Sollbereiches festgestellt, wird nicht nur ein Störsignal ausgelöst, sondern auch ein Betriebsparameter der Adsorptionstrockneranlage, eine Adsorptions- und/oder eine Regenerationszeit für den ersten und/oder den zweiten Behälter geändert. Auf diese Weise schaltet der Prozessor von der vorherigen normalen Steuerung auf eine nun geänderte Steuerung um. Dadurch wird die Qualität des aufbereiteten Gasstromes sichergestellt, selbst wenn eine Störung aufgetreten ist. So ist ein Notlaufprogramm der Adsorptionstrockneranlage vorhanden, wodurch trotz einer Funktionsstörung ein weiterer Betrieb solange sichergestellt ist, bis eine entsprechende Fehlerbehebung möglich ist. Dieses ist insbesondere vorteilhaft, wenn die Reparatur erst nach Anreise eines Technikers erfolgen kann. Dieses ist sehr häufig bei besonders kleinen Adsorptionstrockneranlagen gegeben, wie sie beispielsweise in Zahnarztpraxen vorhanden sind. Insbesondere fiir diese kleinen Adsorptionstrockneranlagen hat sich das Verfahren zur Überprüfung der Funktionsfähigkeit einer Adsorptionstrockneranlage als äußerst vorteilhaft erwiesen.

Gemäß einer weiteren Ausgestaltung der Vorrichtung hat diese eine Funktionsüberprüfungsvorrichtung mit:
- einem Meßwertaufnehmer, mittels dem ein Meßwert in funktionaler Abhängigkeit vom Regenerationsgasstrom aufnehmbar ist,
- einem Prozessor zur Aufnahme und Weiterverarbeitung eines Meßwertsignales am Meßwertaufnehmer,
- einer Speichereinheit für die Speicherung von zumindest einem Sollbereich für den Meßwert, wobei
- der Prozessor und die Speichereinheit so miteinander verbunden sind, daß ein Vergleich von Meßwert und Sollbereich möglich ist, und
- einer in Verbindung mit dem Prozessor stehende Anzeige, die bei einem Meßwert außerhalb des Sollbereiches durch den Prozessor ansteuerbar ist.

Der Meßwertaufnehmer ist vorteilhafterweise in einem Überströmkanal angeordnet, durch den der Regenerationsgasstrom von einem schon durch das erste Adsorbensbett getrockneten Gasstrom abzweigbar und dem zweiten Adsorbensbett zuführbar ist. Weiterhin ist der Meßwertaufnehmer ebenfalls in einer Leitung anordenbar, die zumindest Teil einer Verbindung zwischen dem ersten oder dem zweiten Adsorbensbett und der die Adsorptionstrockneranlage umgebenden Atmosphäre ist. Eine andere Möglichkeit der Anordnung eines Meßwertaufnehmers besteht darin, diesen in einer Leitung anzuordnen, durch die ein durch das erste Adsorbensbett getrockneter, nach Abzweigung des Regenerationsgasstromes in den Überströmkanal zum zweiten Adsorbensbett verbleibender Gasstrom durchgeleitet wird. Bei nachträglicher Nachrüstung kann der Meßwertaufnehmer auch an einem entsprechenden Gasauslaß angebracht werden, so daß keine hohen Umbauarbeiten notwendig werden. Dazu werden in einer vorteilhaften Weiterbildung die notwendigen nachzurüstenden Bauteile der Funktionsüberprüfungsvorrichtung in einem Gehäuse untergebracht, daß an den Gasauslaß angeschlossen wird.

Als Meßwertaufnehmer ist eine Volumenstrommeßvorrichtung einsetzbar oder auch ein Druckmeßwertaufnehmer. Bei Anordnung eines Druckmeßwertaufnehmers in der Nähe eines Ventiles kann dieses als Drossel genutzt werden. Über Feststellung des Druckes ist dann auf den Volumenstrom ein Rückschluß möglich.

Weiterhin hat die Adsorptiontrockneranlage einen Prozessor der vorteilhafterweise eine Steuerung für die Adsorptionstrockneranlage aufweist, die auf einen Meßwert außerhalb des vorgebbaren Sollbereiches für den Meßwert reagiert. Eine Reaktion ist möglich, wie sie bei dem vorhergehenden Verfahren beschrieben worden ist. Um die Steuerung der Adsorptionstrockneranlage durch den Prozessor insbesondere an den Betrieb anpassen zu können, weist die Adsorptionstrockneranlage einen Sensor zur Aufnahme eines Betriebsparameters auf, wobei der Sensor eine Verbindung zum Prozessor und/oder zur Speichereinheit hat. Auf diese Weise gelingt es weiterhin, den Sollbereich mit einem oder mehreren Betriebsparametern in einen funktionalen Zusammenhang zu bringen.

In einer weiteren Ausgestaltung der Adsorptionstrockneranlage weist die Speichereinheit einen Anschluß für eine Eingabeeinheit zur Speicherung von Sollbereichen in Abhängigkeit von zumindest einem Betriebsparameter der Adsorptionstrockneranlage auf. Dieses ermöglicht, daß im Herstellungswerk selbst Kennfelder eingegeben werden, die später nicht mehr unbeabsichtigt im Betrieb verändert werden können. Auch ermöglicht der Anschluß, daß über diesen nicht nur Daten ein- sondern auch ausgebbar sind. Bei Wartungsarbeiten besteht dann die Möglichkeit, Daten aufzunehmen und über diese die Adsorptionstrockneranlage auf ihren technischen Zustand hin beurteilen zu können. Dadurch wird die Möglichkeit geschaffen, Funktionsstörungen sehr frühzeitig schon in ihren Ansätzen erkennen zu können. Die Adsorptionstrockneranlage weist insbesondere eine Steuerung auf, der ein Steuerprogramm zugeordnet ist, welches wie ein oben beschriebenes Verfahren definiert ist.

Das Verfahren zur prozessorgesteuerten Überprüfung der Funktionsfähigkeit einer Adsorptionstrockneranlage sowie die prozessorgesteuerte Adsorptionstrockneranlage eignet sich insbesondere für kleinere, kompakte Geräte, aber auch für größere, die beispielsweise bei Drucklufterzeugungsanlagen für Druckluftnetze in großen Firmen oder Anlagenbereichen benötigt werden. Eine vorteilhafte Anwendung der Erfindung wird im folgenden anhand einer Adsorptionstrockneranlage, die besonders kompakt aufgebaut ist, beschrieben.

Ein Ausführungsbeispiel für die erfindungsgemäße Adsorptionstrockneranlage wird anhand der Zeichnung näher erläutert. Dabei werden besondere Merkmale und Vorteile für diese Vorrichtung angegeben, wobei die Erfindung jedoch nicht auf dieses Ausführungsbeispiel beschränkt ist. Die einzelnen Figuren der Zeichnung zeigen:
- Figur 1: ein Ausführungsbeispiel einer Vorrichtung mit einem Funktionsblock, an dem ein Vorfilter und ein Nachfilter befestigt sind, mit zwei Behältern sowie mit im Funktionsblock integrierten Meßwertaufnehmern,
- Figur 2: den Funktionsblock gemäß Fig. 1 in vergrößerter Darstellung,
- Figur 3: ein Kanalformbauteil in Draufsicht,
- Figur 4: das Kanalformbauteil in perspektivischer Darstellung und
- Figur 5: ein Ablaufschema für ein Verfahren zur prozessorgesteuerten Überprüfung der Vorrichtung.

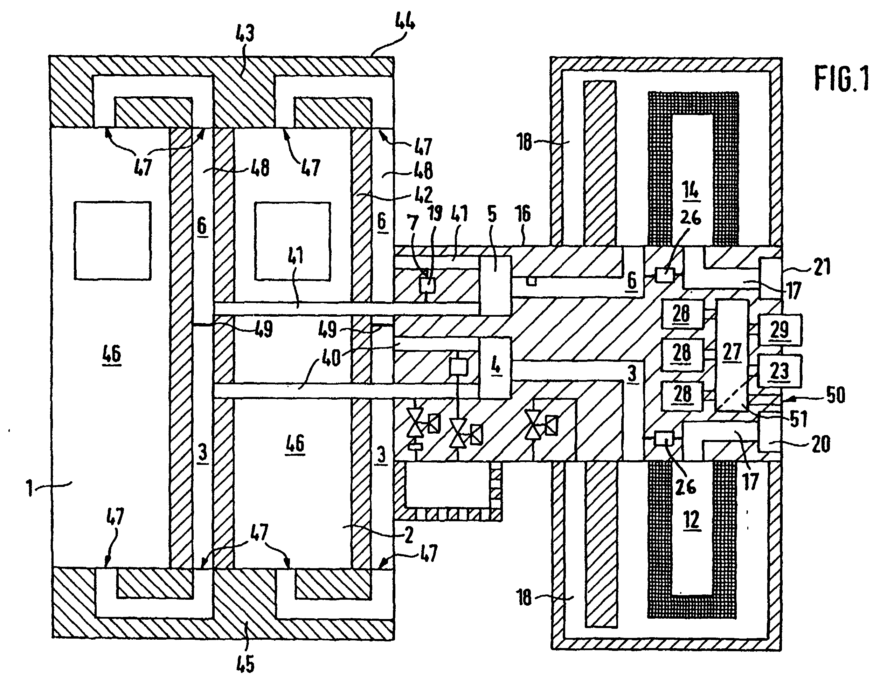

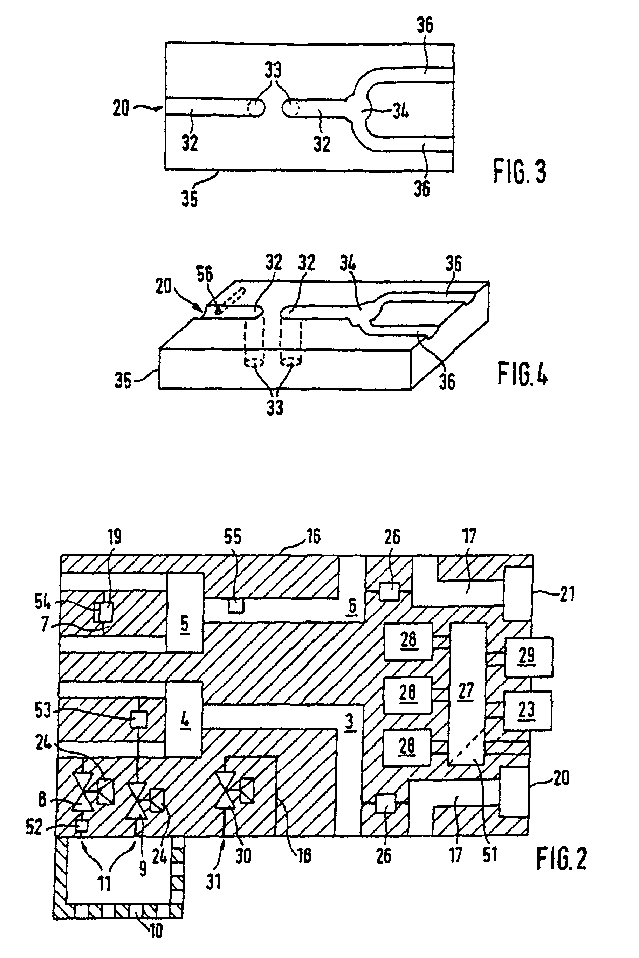

In Figuren 1 und 2 ist eine bevorzugte Ausführungsform einer erfindungsgemäßen Vorrichtung mit integrierter Überprüfung der Funktionsfähigkeit dargestellt. Zwei Behälterhohlräume 46 liegen zusammen mit jeweils einem ihnen zugeordneten Leitungshohlraum 48 in einem Behälterkorpus 42. Die Leitungshohlräume 48 sind jeweils gasdicht mit einer Gassperre 49 in zwei Teilhohlräume unterteilt. Die Verbindung der Behälterhohlräume 46 zu den Leitungshohlräumen 48 erfolgt über einen auslaßseitigen Hohlraumverbinder 44 (oben) und über einen einlaßseitigen Hohlraumverbinder 45 (unten). Die Verbindung wird über Leitungsstücke jeweils zwischen Hohlraumöffnungen 47 hergestellt. Die Leitungsstücke in dem einlaßseitigen Hohlraumverbinder 45 gehören zusammen mit den beiden unteren Teilhohlräumen den Einlaßbusleitungen 40 und Leitungsstücken im Funktionsblock 16 zu dem Gaseinlaß 3. Die Leitungsstücke in dem auslaßseitigen Hohlraumverbinder 44 gehören zusammen mit den beiden oberen Teilhohlräumen, den Auslaßbusleitungen 41 und Leitungsstücken im Funktionsblock 16 zu dem Gasauslaß 6.

Das Behälterpaar 43 mit dem ersten Behälter 1 und dem zweiten Behälter 2, in die jeweils ein Adsorbensbett einfiillbar ist, ist neben dem Funktionsblock 16 angeordnet. Dieser enthält ein erstes passives Wechselventil 4 im Gaseinlaß 3 und ein zweites passives Wechselventil 5 im Gasauslaß 6. Der Gaseinlaß 3 ist an einen Vorfilter 12 angeschlossen, der wiederum über eine Anschlußleitung 17 eine Verbindung zu dem Gaseinlaßanschluß 20 besitzt. Weiterhin hat der Vorfilter 12 über eine Filterrückstandsableitung 18 eine Verbindung zu dem Funktionsblock, wobei die Filterrückstandsableitung 18 in dem Funktionsblock 16 weitergeführt ist. An ein Leitungsstück des Gasauslasses 6 ist der Nachfilter 14 angeschlossen. Über eine Anschlußleitung 17 besitzt er eine Verbindung zum Gasauslaßanschluß 21. Auch der Nachfilter 14 ist an eine Filterrückstandsableitung 18 angeschlossen, die jedoch am Funktionsblock 16 endet. Sie wird im vorliegenden Ausführungsbeispiel nicht benutzt und existiert lediglich aus fertigungstechnischen Gründen. Der Funktionsblock 16 weist drei Magnetventile 28 auf, die der Ansteuerung der drei im linken unteren Teil des Funktionsblocks 16 dargestellten Ventile dienen. Die Verbindungen dorthin sind in Figur 1 nicht dargestellt. Die drei Magnetventile sind über elektrische Leitungen mit einer Steuerungselektronikeinheit 27 verbunden, die wiederum mit einem Bedienelement 29 und einem Anzeigeelement 23 verbunden ist. Die Steuerungselektronik 27 dient als Prozessor zur Aufnahme und Weiterverarbeitung eines Meßwertsignales. Das Anzeigeelement 23 ist durch die Steuerelektronik 27 ansteuerbar, wenn ein Meßwert außerhalb eines Sollbereiches liegt. Zwei unterhalb des Anzeigeelementes 23 liegende elektrische Leitungen führen von der Steuerungselektronikeinheit 27 zu elektrischen Anschlüssen 50 an der rechten Außenseite des Funktionsblocks 16. Sie dienen zum einen der Kontrolle und der Fehlerdiagnose, beispielsweise durch einen Servicetechniker am Betriebsort der Vorrichtung, zum anderen sind die Anschlüsse 50 auch zur Eingabe von Daten, insbesondere von Sollbereichen in eine Speichereinheit 51 oder in die Steuerelektronik 27 nutzbar. Wesentliche Informationen über den Betriebszustand können aber auch am Anzeigeelement 23 abgelesen werden. Dieses ist in einer bevorzugten Weiterbildung in der Lage, einen störungsfreien genauso wie einen gestörten Funktionsablauf anzuzeigen. Auch weist es die Möglichkeit auf, bei Auslösung eines Störsignals bei einem außerhalb des Sollbereiches liegenden Meßwert die Störquelle anzuzeigen. Das Bedienelement 29 wiederum erlaubt die direkte manuelle Bedienung der Vorrichtung, etwa dem Ein- bzw. Ausschalten oder der manuellen Steuerung der Ventile im Funktionsblock 16 oder dem Ändern von Betriebsparametern oder Sollbereichen.

Die Funktionen der im linken unteren Teil des Funktionsblocks 16 liegenden Ventile und weiterer Details des Funktionsblocks 16 werden anhand von Figur 2 erläutert. Das erste Auslaßventil 8 befindet sich in einem Zweig des Nebenstromauslasses 11, der den Gaseinlaß 3 mit dem Schalldämpfer 10 verbindet, der wiederum mit der Umgebung des Funktionsblockes 16 verbunden ist. Das erste Auslaßventil 8 ist als ein Membranventil ausgeführt, welches mit Hilfe eines der Magnetventile 28 ansteuerbar ist. Dabei ist eine zugehörige Ventilsteuerplatine 24 an dem Magnetventil 28 gehaltert. Bei einer besonders intensiv überwachbaren Ausführungsform der Erfindung ist zwischen dem Nebenstromauslaß 11 und dem ersten Auslaßventil 8 ist ein erster Meßwertaufnehmer 52 angeordnet. Dieser mißt beispielsweise den als Regenerationsstrom ausfließenden Volumenstrom nach Durchströmen des in dieser Figur nicht dargestellten Behälters 2. Das zweite Auslaßventil 9 befindet sich in einem anderen Zweig des Nebenstromauslasses 11, der den Gaseinlaß 3 mit dem Schalldämpfer 10 verbindet. Es wird von einem anderen der Magnetventile 28 angesteuert. Zwischen dem zweiten Auslaßventil 9 und dem Gaseinlaß 3 ist ein zweiter Meßwertaufnehmer 53 angeordnet, der den Regenerationsgasstrom nach Durchströmung des in dieser Figur nicht dargestellten Behälters 1 mißt. Die notwendige Verbindung zwischen dem zweiten Meßwertaufnehmer 53 und der Steuerungselektronik 27 ist hier genausowenig dargestellt wie für den ersten Meßwertaufnehmer 52. Anstatt des Massenstromes direkt kann bei einer anderen Ausführung der Massenstrom indirekt über eine Druckmessung mittels des ersten 52 und des zweiten Meßwertaufnehmers 53 aufgenommen, wobei die beiden Meßwertaufnehmer vorzugsweise so in den Funktionsblock 16 integriert sind, daß mit ihnen eine Differenzdruckmessung durchgeführt werden kann. Die beiden Meßwertaufnehmer zur Messung der Druckdifferenz können aber auch alternativ zwischen den Filtern in Leitungen angeordnet sein. In einer weiteren, hier nicht dargestellten Ausführungsform werden die jeweiligen Regenerationsgasströme nach den beiden Auslaßventilen 8,9 in einem gemeinsamen Nebenstromauslass geführt und auch dort gemessen. Dem Ablaßventil 30 ist das dritte der Magnetventile 28 zugeordnet. Es erlaubt ein Ablassen von Filterrückständen über die Filterrückstandsableitung 18 aus der Ablaßöffnung für Filterrückstände 31. Die beiden Differenzdruckaufnehmer 26 dienen der Zustandskontrolle der Filtermittel in den in Figur 1 dargestellten Filtern 12, 14. Ist die Druckdifferenz zu groß, löst der Differenzdruckaufnehmer 26 in der Steuerungselektronikeinheit 27 ein Signal aus, daß das Filtermittel ausgewechselt werden muß. Diese Information wird durch Leuchten einer Leuchtdiode in dem Anzeigeelement 23 nach außen sichtbar gemacht. Bei Varianten der bestehenden Ausführungsform wird die Information stattdessen oder zusätzlich auf andere optisch erkennbare Weise oder durch ein akustisches Signal deutlich gemacht. Weiterhin ist die aufgenommene Druckdifferenz auch als Betriebsparameter nutzbar. Die Differenzdruckaufnehmer 26 sind in den Funktionsblock 16 so eingebaut, daß sie kontaktlos, insbesondere über einen entsprechend dem Differenzdruck verschiebbaren Magneten und einen Magnetfeldsensor, auf die Steuerungselektronikeinheit 27 oder die Ventilsteuerplatine 24 wirken, so daß Verbindungsleitungen vermieden werden.

Im oberen linken Bildteil von Figur 2 ist die Bypassleitung 7 als Überströmkanal mit einer in ihr angeordneten Bypassdrossel 19 dargestellt. Bei Weiterbildungen der Ausführungsform ist die Drosselwirkung der Bypassdrossel von der Steuerungselektronikeinheit 27 aus steuerbar, beispielsweise indem ein Öffnungsquerschnitt in der Bypassdrossel 19 verändert wird. In der Bypassleitung 7 selbst bzw. in der Bypassdrossel 19 besteht ebenfalls die Möglichkeit, einen Meßwertaufnehmer anzuordnen. Mit diesem dritten Meßwertaufnehmer 54 in der Bypassdrossel 19 ist dies in der Fig. 2 angedeutet. Im Gasaulaß 6 befindet sich ein vierter Meßwertaufnehmer 55. Diese Meßaufnehmer müssen natürlich nicht alle gleichzeitig vorhanden sein, sondern veranschaulichen verschiedene mögliche Einbaulagen für die Sensorik. Ist bekannt, wie groß in etwa der Regenerationsgasvolumenstrom aufgrund der Ventilstellung und den Betriebsparametern sein müßte, kann aus dem hinter der Bypassleitung 7 noch strömenden Gasvolumenstrom im Gasauslaß 6 auf die Funktionsfähigkeit des Funktionsblockes 16 zurückgeschlossen werden.

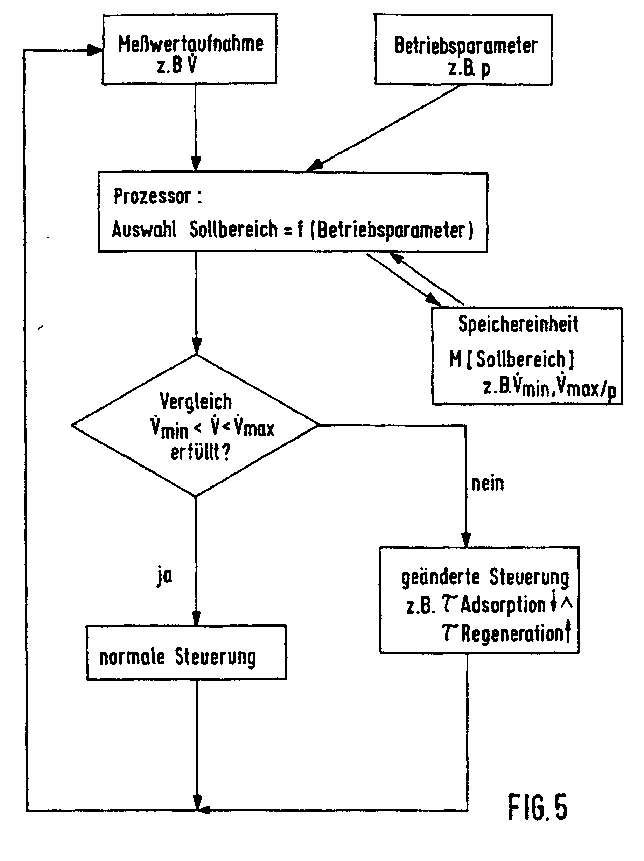

Figur 3 und Figur 4 zeigen ein Kanalformbauteil 35 mit zwei Hauptkanälen 32, die innerhalb des Kanalformbauteils keine Verbindung zueinander haben, zwei Zweigkanälen 36, einem Ventilsitz 34 und zwei Filteranschlüssen 33, die jeweils über eine durch das Kanalformbauteil 35 durchgehende Bohrung mit einem der beiden Hauptkanäle 32 verbunden sind.

Die Kanäle 32, 36 in dem Kanalformbauteil 35 werden durch ein zweites, nicht gezeigtes Kanalformbauteil oder durch eine Abdeckung zu geschlossenen Gasleitungsstücken ergänzt. Das zweite Kanalformbauteil bzw. die Abdeckung ist an der in Figur 4 oben liegenden Seite des Kanalformbauteils 35 anzuordnen. Es können auch mehrere andere Kanalformbauteile und/oder Abdeckungen verwendet werden. Als Abdeckungen sind auch andere Bauteile des Funktionsblocks, z. B. ein Formgehäuse, verwendbar.

Das Kanalformbauteil 35 dient zum Aufbau eines Gaseinlasses. Beim Betrieb einer so aufgebauten Vorrichtung strömt Gas von dem Gaseinlaßanschluß 20 aus durch den sich daran anschließenden Hauptkanal 32 zu dem linken Filteranschluß 33. Über einen nicht gezeigten Filter strömt es durch den rechten Filteranschluß 33 in den rechten Hauptkanal 32. Ein in dem Ventilsitz 34 eingesetztes Wechselventil bestimmt den weiteren Strömungsweg. So strömt das Gas entweder durch den vorderen oder durch den hinteren Zweigkanal 36 weiter. Die Zweigkanäle 36 sind mit dem ersten bzw. mit dem zweiten Behälter verbunden. Ein Sensor 56 ist zur Aufnahme eines Betriebsparameters in der Nähe zum Gaseinlaßanschluß 20 ebenfalls in das Kanalformbauteil 35 eingebracht.

Die in Figur I und Figur 2 gezeigte Ausführungsform einer Vorrichtung wird wie folgt betrieben: Durch den Gaseinlaßanschluß 20 strömt das zu fraktionierende Gas ein. Es durchquert die untere Anschlußleitung 17 den Vorfilter 12 und wird in den Funktionsblock 16 zurückgeführt. Der Ventilzustand der passiven Wechselventile 4 und 5 ist abhängig von dem Ventilzustand der aktiven Ventile 8 und 9, von denen während des Betriebs gleichzeitig eines geschlossen und eines offen ist. Bei offenem ersten Auslaßventil 8 befindet sich das erste passive Wechselventil 4 in einem Ventilzustand, in dem der Vorfilter 12 gegen die untere der beiden Einlaßbusleitungen 40 abgesperrt ist. Das Gas strömt also von dem Vorfilter 12 aus weiter in die obere Einlaßbusleitung 40 und von dort nach unten und durch den einlaßseitigen Hohlraumverbinder 45 von unten in den zweiten Behälter 2. Es durchströmt diesen nach oben, wobei sich Moleküle einer Fraktion des Gases, z. B. Wassermoleküle, an dem im Behälter 2 befindlichen Adsorbens anlagern. Das fraktionierte Gas verläßt den Behälter 2 durch die obere Hohlraumöffnung 47. Es erreicht das zweite passive Wechselventil 5, das einen Ventilzustand hat, bei dem die untere Auslaßbusleitung 41 gegen den Nachfilter 14 abgesperrt ist. Folglich kann das fraktionierte Gas weiter in den Nachfilter 14 strömen und die Vorrichtung über die Anschlußleitung 17 an dem Gasauslaßanschluß 21 verlassen. Das fraktionierte Gas verläßt die Vorrichtung jedoch nicht vollständig, sondern ein Teilstrom des fraktionierten Gases durchquert die Bypassleitung 7 und wird durch die untere Auslaßbusleitung 41 von oben in den ersten Behälter 1 geführt. In dem Behälter 1 regeneriert es das dort befindliche Adsorbens, indem es sich entspannt und Moleküle der Fraktion des Gases wieder aufnimmt. Es verläßt den ersten Behälter 1 durch seine untere Hohlraumöffnung 47 und strömt durch das offene erste Auslaßventil, den linken Nebenstromauslaß 11 und den Schalldämpfer 10 aus der Vorrichtung. Nach einiger Zeit werden das zweite Auslaßventil 9 geöffnet und das erste Auslaßventil 8 geschlossen, woraufhin das erste 4 und das zweite 5 passive Wechselventil umschalten. Als Folge kehrt sich die Strömungsrichtung in beiden Behältern um, wird das in die Vorrichtung eingeströmte Gas in dem ersten Behälter 1 fraktioniert und wird das Adsorbens in dem zweiten Behälter 2 mit Hilfe eines Teilstroms des fraktionierten Gases regeneriert.

Figur 5 zeigt ein Ablaufschema fiir ein Verfahren zur prozessorgesteuerten Überprüfung der Vorrichtung. In den Prozessor geht über die Meßwertaufnahme zum Beispiel der gemessene Volumenstrom d/dt V ein sowie über den Sensor ein Betriebsparameter, zum Beispiel der Druck p. Über die Verbindung zwischen der Speichereinheit und dem Prozessor wird in Abhängigkeit von der Größe des Betriebsparameters ein Sollbereich ausgewählt, der die Ober- und Untergrenze für den Volumenstrom angibt. Der minimale Volumenstrom d/dt Vmin kann dabei auch den Wert 0 annehmen. Im anschließenden Vergleich, ob der aufgenommene, gemessene Volumenstrom d/dt V sich innerhalb des Sollbereiches befindet oder nicht, wird entschieden, ob die Adsorptionstrockneranlage mit normaler Steuerung oder bei einem außerhalb des Sollbereiches vorliegenden Volumenstrom mit geänderter Steuerung betrieben wird. Bei geänderter Steuerung wird zum Beispiel die Adsorptionszeit und/oder die Regenerationszeit verändert, beispielsweise die Adsorptionszeit für ein Adsorbensbett heruntergesetzt und gleichzeitig für dasselbe die Regenerationszeit heraufgesetzt. Durch ständige Wiederholung der Meßwertaufnahme bzw. der Feststellung des aktuellen Betriebsparameters mit entsprechender Sollbereichswahl wird mittels des Prozessors die ausgewählte Art der Steuerung immer wieder überprüft. Auf diese Weise ist insbesondere auch ein Regelkreis ausbildbar, wobei bei Störungen nicht nur eine Fehlermeldung erfolgt, sondern auch eine geeignet modifizierte weitere Betriebsweise des Gerätes sichergestellt werden kann.

Anhand der Zeichnung wurde eine Ausführungsform einer erfindungsgemäßen, besonders kompakten Adsorptionstrockneranlage beschrieben, die mit wenigen Montageschritten aufgebaut werden kann. Außerdem ist diese so aufgebaut, daß die Integration einer Funktionsüberprüfung aufgrund der Kompaktheit der Anlage nur eine geringe Anpassung an die dazu notwendigen Bauteile erfordert. Die Adsorptionstrockneranlage eignet sich vorzugsweise zum Trocknen von Luft, wobei eine Störung der Funktionsfähigkeit schnell feststellbar ist. Die Erfindung ist nicht auf den Fall kleinerer Anlagen begrenzt, sondern eignet sich allgemein zur Überprüfung der Funktionsfähigkeit eines Gerätes zur kontinuierlichen Adsorptionsfraktionierung eines Gases. Auch wurde oben beschrieben, daß die erfindungsgemäße Funktionsüberprüfungsvorrichtung und die Adsorptionsfraktionierungsanlage aufgrund ihres jeweiligen Aufbaus so kompakt sind, daß sie miteinander integriert wenig Raum in Anspruch nehmen und nur geringen Montageaufwand erfordern. Anlage, Funktionsüberprüfungsvorrichtung und Verfahren sind kombiniert in der Lage, ihre jeweiligen weiteren Vorteile zusammenzuführen und dann eine äußerst kompakte sowie übersichtliche Adsorptionstrockneranlage zur Verfügung zu stellen.

### Bezugszeichenliste

- 1: erster Behälter
- 2: zweiter Behälter
- 3: Gaseinlaß
- 4: erstes passives Wechselventil
- 5: zweites passives Wechselventil
- 6: Gasauslaß
- 7: Bypassleitung, Überströmkanal
- 8: erstes Auslaßventil
- 9: zweites Auslaßventil
- 10: Schalldämpfer
- 11: Nebenstromauslaß
- 12: Vorfilter
- 14: Nachfilter
- 16: Funktionsblock
- 17: Anschlußleitung
- 18: Filterrückstandsableitung
- 19: Bypassdrossel
- 20: Gaseinlaßanschluß
- 21: Gasauslaßanschluß
- 23: Anzeigeelement
- 24: Ventilsteuerplatine
- 25: Bedienelement
- 26: Differenzdruckaufnehmer
- 27: Steuerungselektronikeinheit, Prozessor
- 28: Magnetventil
- 29: Bedienelement
- 30: Ablaßventil
- 31: Ablaßöffnung für Filterrückstände
- 32: Hauptkanal
- 33: Filteranschluß
- 34: Ventilsitz
- 35: Kanalformbauteil
- 36: Zweigkanal
- 40: Einlaßbusleitung
- 41: Auslaßbusleitung
- 42: Behälterkorpus
- 43: Behälterpaar
- 44: auslaßseitiger Hohlraumverbinder
- 45: einlaßseitiger Hohlraumverbinder
- 46: Behälterhohlraum
- 47: Hohlraumöffnung
- 48: Leitungshohlraum
- 49: Gassperre
- 50: elektrischer Anschluß
- 51: Speichereinheit
- 52: erster Meßwertaufnehmer
- 53: zweiter Meßwertaufnehmer
- 54: dritter Meßwertaufnehmer
- 55: vierter Meßwertaufnehmer
- 56: Sensor

## Patentansprüche

1. Vorrichtung zum kontinuierlichen Adsorptionsfraktionieren eines Gases, insbesondere zum Trocknen oder Reinigen von Luft, mit mindestens einem Paar (43) von Behältern (1, 2), nämlich aus einem ersten (1) und einem zweiten (2) Behälter, die einen gemeinsamen, über ein erstes Wechselventil (4) verzweigten Gaseinlaß (3) aufweisen und einen gemeinsamen über ein zweites Wechselventil (5) verzweigten Gasauslaß (6), wobei die beiden Behälter (1, 2) im Bereich des Gasauslasses (6) über eine Bypassleitung (7) verbunden sind, wobei weiter beide Behälter (1, 2) im Bereich des Gaseinlasses (3) einzeln absperrbar mit einem Nebenstromauslaß (11) verbunden sind,
**dadurch gekennzeichnet,**
**daß** die Vorrichtung mindestens einen Behälterkorpus (42) aufweist, mit jeweils mindestens einem Behälterhohlraum (46) und jeweils mindestens einem Leitungshohlraum (48), wobei der Behälterhohlraum (46) zwei an voneinander beabstandeten Außenseiten des Behälterkorpus (42) liegende Hohlraumoffnungen (47) hat, und
**daß** der Gaseinlaß (3), der Gasauslaß (6) und der Nebenstromauslaß (11) zu einem gemeinsamen Funktionsblock (16) geführt sind, wobei eine Leitungsverschaltung des Gaseinlasses (3) und des Gasauslasses (6) von bzw. zu den Behältern (1,2) mit dem ersten (4) und dem zweiten (5) Wechselventil sowie weitere Bauteile in dem vorgefertigten funktionsblock integriert sind.

2. Vorrichtung nach Anspruch 1, **dadurch gekennzeichnet, daß** der mindestens eine Behälterkorpus (42) extrudiert ist.

3. Vorrichtung nach Anspruch 1 oder 2, **dadurch gekennzeichnet, daß** der Funktionsblock (16) eine Funktionssteuerung (25; 27; 28) enthält.

4. Vorrichtung nach einem der Ansprüche 1 bis 3, **dadurch gekennzeichnet, daß** der Funktionsblock (16) einen Gaseinlaßanschluß (20) aufweist und daß an dem Funktionsblock (16) ein Vorfilter (12) befestigt ist, der über eine im Funktionsblock liegende Anschlußleilung (17) mit dem Gaseinlaßanschluß verbunden ist.

5. Vorrichtung nach einem der Ansprüche 1 bis 4, **dadurch gekennzeichnet, daß** der Funktionsblock (16) einen Gasauslaßanschluß (21) aufweist und daß an dem Funktionsblock (16) ein Nachfilter (14) befestigt ist, der über eine im Funktionsblock liegende Anschlußleitung (17) mit dem Gasauslaßanschluß verbunden ist.

6. Vorrichtung nach Anspruch 4 oder 5, **dadurch gekennzeichnet, daß** der Filter (12; 14) an eine Filterrückstandsableitung (18) angeschlossen ist, die zum Funktionsblock geführt ist.

7. Vorrichtung nach Anspruch 6, **dadurch gekennzeichnet, daß** der Funktionsblock (16) eine absperrbare Ablaßvorrichtung (30; 31) enthält, mit der die Filterrückstandsableitung (18) verbunden ist.

8. Vorrichtung nach Anspruch 4 und 5, **dadurch gekennzeichnet, daß** der Vorfilter (12) und der Nachfilter (14) an zwei gegenüberliegenden Außenseiten des Funktionsblocks (16) befestigt sind, vorzugsweise der Vorfilter (12) unten und der Nachfilter (14) oben am Funktionsblock (16).

9. Vorrichtung nach einem der Ansprüche 1 bis 8, **dadurch gekennzeichnet, daß** der Funktionsblock (16) mindestens ein Kanalformbauteil (35) mit kanalartigen Aussparungen (32; 36) aufweist,
daß das Kanalformbauteil (35) mindestens einen integrierten Meßwertaufnehmer (26) aufweist und
daß der Meßwertaufnehmer (26) kontaktfrei, insbesondere über einen bewegbaren Magneten und einen Magnetfeldsensor auf eine Ventilsteuerplatine (24) wirkt.

10. Vorrichtung nach Anspruch 9, **dadurch gekennzeichnet, daß** Meßwertaufnehmer (26) und Ventilsteuerplatine (24) so in das Kanalformbauteil (35) integriert sind, daß sie aneinander berührungslos gegenüberliegen.

11. Vorrichtung nach einem der Ansprüche 9 oder 10, **dadurch gekennzeichnet, daß** der Meßwertaufnehmer (26; 52, 53, 57) als Differenzdruckmesser geschaltet ist.

12. Vorrichtung nach einem der Ansprüche 9, 10 oder 11, **dadurch gekennzeichnet, daß** die Ventilsteuerplatine (24) so im Kanalformbauteil (35) geschaltet ist, daß sie ein Membranventil (8) ansteuert.

13. Vorrichtung nach Anspruch 12, **dadurch gekennzeichnet, daß** das Mebranventil (8) in dem Kanalformbauteil (35) integriert ist.

14. Vorrichtung nach einem der vorhergehenden Ansprüche, **dadurch gekennzeichnet, daß** in den Funktionsblock (16) mindestens zwei Meßwertaufnehmer und drei Magnetventile (28) mit daran gehalterter Ventilsteuerplatine (24) integriert sind.

15. Vorrichtung nach einem der Ansprüche 1 bis 14, **dadurch gekennzeichnet, daß** die beiden Behälter (1, 2) im Bereich des Gaseinlasses (3) gemeinsam durch ein oder jeweils durch ein elektronisch steuerbares Auslaßventil (8, 9) einzeln gegen den Nebenstromauslaß (11) absperrbar sind.

16. Vorrichtung nach Anspruch 15, **dadurch gekennzeichnet, daß** das bzw. die elektronisch steuerbaren Auslaßventile (8, 9) eine Ventilsteuerplatine (24) aufweisen, die an dem Auslaßventil (8, 9) gehaltert ist.

17. Vorrichtung nach einem der Ansprüche 1 bis 16, **dadurch gekennzeichnet, daß** das mindestens eine Paar (43) von Behältern (1, 2) über ein System von vier Busleitungen (40; 41) mit dem Funktionsblock (16) verbunden ist, wobei zwei Busleitungen (40) Teil des Gaseinlasses (3) und die zwei anderen (41) Teil des Gasauslasses (6) sind, wovon je eine (40; 41) mit dem ersten Behälter (1) und je eine (40; 41) mit dem zweiten Behälter verbunden ist.

18. Vorrichtung nach einem der vorhergehenden Ansprüche mit einer Funktionsüberprüfungsvorrichtung in einer prozessorgesteuerten Adsorptionstrockneranlage, in der die Regeneration mittels eines Regenerationsgasstromes erfolgt, wobei
- mindestens ein Meßwertaufnehmer (52, 53, 54, 55) vorhanden ist, mittels dessen ein Meßwert in funktionaler Abhängigkeit vom Regenerationsgasstrom aufnehmbar ist,
- ein Prozessor (27) zur Aufnahme und Weiterverarbeitung eines Meßwertsignales vom Meßwertaufnehmer vorhanden ist,
- eine Speichereinheit (51) für die Speicherung von zumindest einem Sollbereich für den Meßwert vorhanden ist,
- der Prozessor (27) und die Speichereinheit (51) so miteinander verbunden sind, daß ein Vergleich von Meßwert und Sollbereich möglich ist, und
- eine Anzeige (23) in Verbindung mit dem Prozessor (27) steht, die bei einem Meßwert außerhalb des Sollbereiches durch den Prozessor (27) ansteuerbar ist.

19. Vorrichtung mit einer Funktionsüberprüfungsvorrichtung in einer Adsorptionstrockneranlage nach Anspruch 18, **dadurch gekennzeichnet, daß** als Meßwertaufnehmer (52, 53, 54, 55) ein Druckmeßwertaufnehmer vorhanden ist.

20. Vorrichtung mit einer Funktionsüberprüfungsvorrichtung in einer Adsorptionstrockneranlage nach einem der vorhergehenden Ansprüche, **dadurch gekennzeichnet, daß** als Meßwertaufnehmer (52, 53, 54, 55) ein Massenstromsensor, vorzugsweise in der Nähe eines Auslasses (11, 21) angeordnet ist.

21. Vorrichtung mit einer Funktionsüberprüfungsvorrichtung in einer Adsorptionstrockneranlage nach einem der vorhergehenden Ansprüche, **dadurch gekennzeichnet, daß** der Prozessor (27) eine Steuerung für die Adsorptionstrockneranlage aufweist, die auf einen Meßwert außerhalb des vorgebbaren Sollbereiches für den Meßwert reagiert.

22. Vorrichtung mit einer Funktionsüberprüfungsvorrichtung in einer Adsorptionstrockneranlage nach einem der vorhergehenden Ansprüche, **dadurch gekennzeichnet, daß** diese einen Sensor (56) zur Aufnahme eines Betriebsparameters aufweist, wobei der Sensor (56) eine Verbindung zum Prozessor (27) und/oder zur Speichereinheit (51) aufweist.

23. Vorrichtung mit einer Funktionsüberprüfungsvorrichtung in einer Adsorptionstrockneranlage nach einem der vorhergehenden Ansprüche, **dadurch gekennzeichnet, daß** die Speichereinheit (51) einen Anschluß (50) für eine Eingabeeinheit zur Speicherung von Sollbereichen in Abhängigkeit von zumindest einem Betriebsparameter der Adsorptionstrockneranlage aufweist.

24. Vorrichtung mit einer Funktionsüberprüfungsvorrichtung in einer Adsorptionstrockneranlage nach einem der vorhergehenden Ansprüche, **dadurch gekennzeichnet, daß** der Meßwerteaufnehmer, die Speichereinheit und der Prozessor in einem Funtionsblock in einer Vorrichtung gemäß einem der Ansprüche 1 bis 17 integriert sind.

25. Vorrichtung mit einer Funktionsüberprüfungsvorrichtung in einer Adsortionstrockneranlage nach einem der vorhergehenden Ansprüche, **dadurch gekennzeichnet, daß** diese als Nachrüstung an der Adsortionstrockneranlage angebracht ist.

26. Vorrichtung mit einer Funktionsüberprüfungsvorrichtung in einer Adsorptionstrockneranlage nach einem der vorhergehenden Ansprüche, **dadurch gekennzeichnet, daß** diese eine Steuerung aufweist, in die ein Verfahren nach einem der nachfolgenden Ansprüche 27 bis 38 integriert ist.

27. Verfahren zum kontinuierlichen Adsorptions fraktionieren mit einer prozessorgesteuerten Überprüfung der Funktionsfähigkeit einer Adsorptionstrockneranlage gemäß einem der vorhergehenden Ansprüche, bei der die Regeneration über einen Regenerationsgasstrom erfolgt, mit den folgenden Schritten
- es wird ein Meßwert aufgenommen, der in funktionaler Beziehung zum Regenerationsgasstrom steht,
- es erfolgt ein prozessorgesteuerter Vergleich, ob der Meßwert innerhalb eines vorgebbaren Sollbereiches für den Meßwert liegt und
- bei einem außerhalb des Sollbereiches liegenden Meßwert wird ein Signal ausgelöst.

28. Verfahren nach Anspruch 27, **dadurch gekennzeichnet, daß** der Meßwert ein in funktionaler Beziehung zu einem Adsorptionsgasstrom stehender Meßwert ist, von dem auf die Größe des zugehörigen Regenerationsgasstromes geschlossen wird.

29. Verfahren nach Anspruch 27 oder 28, **dadurch gekennzeichnet, daß** der Meßwert und/oder der zeitliche Verlauf des Meßwertes zeitlich zugeordnet zu einem Öffnen oder Verschließen eines Ventiles (4, 5, 8, 9) der Adsorptionstrockneranlage aufgenommmen wird.

30. Verfahren nach einem der Ansprüche 27 bis 29, **dadurch gekennzeichnet, daß** ein erster und ein zweiter Meßwert hintereinander aufgenommen und in Beziehung zueinander gesetzt werden, wobei dem zweiten Meßwert zumindest ein Parameter zugrunde liegt, der gegenüber dem ersten Meßwert verändert wird.

31. Verfahren nach Anspruch 30, **dadurch gekennzeichnet, daß** aus einer Funktion zwischen erstem Meßwert, zweitem Meßwert und Parameter eine Funktionsüberprüfung vorgenommen wird.

32. Verfahren nach einem der Ansprüche 27 bis 31, **dadurch gekennzeichnet, daß** der vorgebbare Sollbereich für den Meßwert eingespeichert wird, vorzugsweise als Funktion von mindestens einem Betriebsparameter der Adsorptionstrockneranlage.

33. Verfahren nach einem der Ansprüche 27 bis 32, **dadurch gekennzeichnet, daß** der Sollbereich abhängig von einem Betriebsparameter der Adsorptionstrockneranlage aus einer Anzahl von eingespeicherten Sollbereichen ausgewählt wird.

34. Verfahren nach Anspruch 32 oder 33, **dadurch gekennzeichnet, daß** zumindest während des Betriebes der Adsorptionstrockneranlage der Betriebsparameter über zumindest einen Sensor (56) aufgenommen wird.

35. Verfahren nach Anspruch 32, 33 oder 34, **dadurch gekennzeichnet, daß** der zum Betriebsparameter zugehörige Sollbereich prozessorgesteuert ausgewählt wird, wobei vorzugsweise während des Betriebes der Adsorptionstrockneranlage diese Auswahl zumindest von Zeit zu Zeit überprüft und gegebenenfalls angepaßt wird.

36. Verfahren nach einem der Ansprüche 27 bis 35, **dadurch gekennzeichnet, daß** bei einem Meßwert außerhalb des Sollbereiches aus vorgebbaren Abweichungen mittels des Prozessors (27) auf eine Störquelle geschlossen wird.

37. Verfahren nach einem der Ansprüche 27 bis 36, **dadurch gekennzeichnet, daß** die zeitliche Aufeinanderfolge der Meßwerte analysiert und auf das Verhalten der Adsorptionstrockneranlage in die Zukunft hochgerechnet wird.

38. Verfahren nach einem der Ansprüche 27 bis 37, **dadurch gekennzeichnet, daß** bei einem Meßwert außerhalb des Sollbereiches zumindest ein Betriebsparameter der Adsorptionstrockneranlage, eine Adsorptions- und/oder eine Regenerationszeit für den ersten und/oder zweiten Behälter (1, 2) geändert wird, insbesondere unter Einbeziehung gespeicherter Daten aus einer Erfahrungswertematrix.

## Claims

1. Apparatus for continuous adsorption fractionation of a gas, in particular for the drying or cleaning of air, comprising at least one pair 43 of tanks 1, 2, namely a first 1 and a second 2 tank; the tanks being provided with a common bifurcated gas inlet 3, which is equipped with a first shuttle valve 4, and a common bifurcated gas outlet 6, equipped with a second shuttle valve 5. In the region of the gas outlet 6 the two tanks 1, 2 are connected via a bypass line 7, and in the region of the gas inlet 3 both tanks are connected by a bypass outlet 11, each tank having the capability of being shut off individually; the apparatus being **characterised in that** it comprises at least one tank body 42 with at least one tank cavity 46 and at least one channel cavity 48, with the tank cavity 46 having two outside openings 47 outside of the tank body 42, spaced apart, with the gas inlet 3, the gas outlet 6 and the bypass outlet 11 leading to a manifold block and system module 16, with the interconnections between gas inlet 3 and gas outlet 6 between the tanks 1, 2 and the first 4 and second 5 shuttle valve and further components being integrated into the pre-fabricated manifold block and system module.

2. Apparatus according to claim 1, **characterised in that** at least one tank body 42 is extruded.

3. Apparatus according to claim 1 or 2, **characterised in that** the manifold block and system module 16 is equipped with a functional control system 25, 27, 28.

4. Apparatus according to one of claims 1 to 3, **characterised in that** the manifold block and system module 16 is provided with a gas inlet connection 20 and that a pre-filter 12 is attached to the manifold block and system module 16 with the pre-filter being connected to the gas inlet connection via a connecting line 17, the connecting line 17 being integrated into the manifold block and system module.

5. Apparatus according to one of claims 1 to 4, **characterised in that** the integrated manifold block and system module 16 is provided with a gas outlet connection 21 and that a subsequent filter 14 is attached to the integrated manifold block and system module 16 which in turn is connected to the gas outlet connection via a connecting line 17 which is integrated into the manifold block and system module.

6. Apparatus according to claim 4 or 5, **characterised in that** the filter 12, 14 is connected to a filter residue drain pipe 18 which leads to the manifold block and system module.

7. Apparatus according to claim 6, **characterised in that** the manifold block and system module 16 comprises a drainage facility 30, 31 which can be shut off and to which the filter residue drainage pipe 18 is connected.

8. Apparatus according to claims 4 and 5, **characterised in that** the pre-filter 12 and the subsequent filter 14 are attached to the two opposite outer walls of the manifold block and system module 16, with the pre-filter 12 being preferably attached to the lower end, and the subsequent filter 14 preferably to the higher end of the manifold block and system module.

9. Apparatus according to one of claims 1 to 8, **characterised in that** the manifold block and system module 16 is provided with at least one duct block 35 with duct-type passageways 32, 36, and that the duct block 35 is provided with at least one integrated sensor 26 and that the sensor 26 acts contactless on a valve control PCB 24, in particular by means of a moveable magnet and a magnetic field sensor.

10. Apparatus according to claim 9, **characterised in that** the sensor 26 and the valve control PCB 24 are integrated into the duct block 35 in such a way that they are positioned adjacent and opposite to each other without making any contact.

11. Apparatus according to one of claims 9 or 10, **characterised in that** the sensor 26, 52, 53, 57 is arranged as a differential pressure gauge.

12. Apparatus according to one of claims 9, 10 or 11, **characterised in that** the valve control PCB 24 is arranged in the duct block 35 in such a way that it drives a diaphragm valve 8.

13. Apparatus according to claim 12, **characterised in that** the diaphragm valve 8 is integrated into the duct block 35.

14. Apparatus according to one of the previous claims, **characterised in that** at least two sensors and three solenoid valves 28 with attached valve control PCB 24 are integrated into the manifold block and system module 16.

15. Apparatus according to one of claims I to 14, **characterised in that** both tanks 1, 2 in the region of the gas inlet 3 can be shut off from the bypass outlet 11 together or individually by an electronically controlled outlet valve 8, 9.

16. Apparatus according to claim 15, **characterised in that** the electronically controlled outlet valve or valves 8, 9 are provided with a valve control PCB 24 which is attached to the outlet valve 8, 9.

17. Apparatus according to one of claims 1 to 16, **characterised in that** at least one of the pair 43 of tanks 1, 2 is connected to the manifold block and system module 16 by way of a system of four bus lines 40, 41, with two bus lines 40 being part of the gas inlet 3 and the two others 41 part of the gas outlet 6 with one of each (40, 41) being connected to the first tank 1 and one of each 40, 41 to the second tank.

18. Apparatus according to one of the previous claims with an operating state checking facility in a processor-controlled adsorption drying unit in which the regeneration takes place in a regenerating gas stream where
- there is at least one sensor 52, 53, 54, 55 present with which a reading can be taken which is a function of the regeneration gas stream,
- there is a processor 27 to pick up and process the signal from the sensor,
- there is a storage unit 51 for storing of at least one setpoint range for the reading,
- the processor 27 and the storage unit 51 are interconnected such that reading and setpoint range can be compared,
- there is a display 23 connected to the processor 27 which can be driven by the processor if a reading is outside the setpoint range.

19. Apparatus provided with an operating state checking facility according to claim 18, **characterised in that** a pressure sensor is provided as sensor 52, 53, 54, 55.

20. Apparatus provided with an operating state checking facility in an adsorption drying unit according to one of the previous claims, **characterised in that** a mass flow sensor is located as sensor 52, 53, 54, 55, preferably in proximity of the outlet 11, 21.

21. Apparatus provided with an operating state checking facility in an adsorption drying unit according to one of the previous claims, **characterised in that** the processor 27 is provided with a control system for the adsorption drying unit which responds to a reading which lies outside the setpoint range which can be predetermined for the measured value.

22. Apparatus provided with an operating state checking facility in an adsorption drying unit according to one of the previous claims, **characterised in that** same is provided with a sensor 56 for registering a process parameter and where the sensor 56 is provided with a connection to the processor 27 and / or the storage unit 51.

23. Apparatus provided with an operating state checking facility in an adsorption drying unit according to one of the previous claims, **characterised in that** the storage unit 51 is provided with a connection 50 for an input unit for the storage of setpoint ranges as a function of at least one operating parameter of the adsorption drying unit.

24. Apparatus provided with an operating state checking facility in an adsorption drying unit according to one of the previous claims, **characterised in that** the sensor, the storage unit and the processor are integrated in one manifold block and system module in accordance with one of claims 1 to 17.

25. Apparatus provided with an operating state checking facility in an adsorption drying unit according to one of the previous claims, **characterised in that** it is retrofitted to an adsorption drying unit.

26. Apparatus provided with an operating state checking facility in an adsorption drying unit according to one of the previous claims, **characterised in that** it is provided with a control system into which a process is integrated according to one of the following claims 27 to 38 below.

27. Process for continuous adsorption fractionation provided with process-controlled checking of the functional capability of an adsorption drying unit according to one of the previous claims where the regeneration takes place by regeneration gas stream involving the following steps:
- take a reading which is a function of the regeneration gas stream;
- ascertain by means of a processor whether the reading is within a pre-determinable setpoint range for the measured value, and
- trigger a signal if the reading happens to be outside the setpoint range.

28. Process according to claim 27, **characterised in that** the reading represents a measured value which is a function of an adsorption gas stream on the basis of which the magnitude of the associated regeneration gas stream is deduced.

29. Process according to claim 27 or 28, **characterised in that** the reading taken and / or the trend of the reading is related to the opening or closing of a valve 4, 5, 8, 9 of the adsorption drying unit.

30. Process according to one of claims 27 to 29, **characterised in that** a first and a second reading are taken one after the other and related to each other, with the second reading being based on a parameter which changes in relation to the first reading.

31. Process according to claim 30, **characterised in that** the operating state is being checked based on a functional relationship between a first and a second reading and a parameter.

32. Process according to one of claims 27 to 31, **characterised in that** the setpoint range that can be predetermined for the reading is stored, preferably as a function of at least one operational parameter of the adsorption drying unit.

33. Process according to one of claims 27 to 32, **characterised in that** the setpoint range, which is dependent upon an operating parameter of the adsorption drying unit, is chosen from a number of stored setpoint ranges.

34. Process according to claim 32 or 33, **characterised in that** at least during the operation of the adsorption drying unit the operating parameter is measured by at least one sensor 56.

35. Process according to claims 32, 33 or 34, **characterised in that** the setpoint range associated with the operating parameter is chosen by processor control. This choice should be checked from time to time, preferably during the operation of the adsorption drying unit, and, if need be, adapted.

36. Process according to one of claims 27 to 35, **characterised in that**, in the case of a reading lying outside the setpoint range of pre-determinable deviations, a malfunction is assumed by the processor 27.

37. Process according to one of claims 27 to 36, **characterised in that** the time sequence of the readings is analysed and an estimate calculated of future performance of the adsorption drying unit.

38. Process according to one of claims 27 to 37, **characterised in that** a reading occurring outside the setpoint range of at least one operating parameter of the adsorption drying unit, the adsorption and / or regeneration time for the first and / or the second tank 1, 2 would be changed, in particular by taking into consideration stored data from a matrix of empirical values.

## Revendications

1. Dispositif pour fractionner par adsorption un gaz en continu, notamment pour sécher ou purifier de l'air, comprenant au moins une paire (43) de réservoirs (1, 2), à savoir un premier (1) et un second (2) réservoir qui présentent une entrée de gaz (3) commune se ramifiant par le biais d'une première soupape à deux voies (4) et une sortie de gaz (6) commune se ramifiant par l'intermédiaire d'une seconde soupape à deux voies (5), sachant que les deux réservoirs (1, 2) sont reliés entre eux au niveau de la sortie de gaz (6) par le biais d'une dérivation (7), sachant en outre que les deux réservoirs (1, 2) sont reliés à une sortie de flux secondaire (11) au niveau de la sortie de gaz (3) et peuvent être fermés individuellement, **caractérisé en ce que** l'installation présente au moins un corps de réservoir (42) comprenant une cavité de réservoir (46) et au moins une cavité de conduite (48), sachant que la cavité de réservoir (46) comporte deux ouvertures de cavité (47) situées sur des faces extérieures distantes l'une de l'autre du corps de réservoir (42), et **en ce que** l'entrée de gaz (3), la sortie de gaz (6) et la sortie du flux secondaire (11) sont réunies en un bloc fonctionnel commun (16), sachant qu'un réseau de conduites reliant l'entrée de gaz (3) et la sortie de gaz (6) aux réservoirs (1, 2) à l'aide de la première (4) et de la seconde (5) soupape à deux voies, ainsi que d'autres composantes sont intégrés dans le bloc fonctionnel préfabriqué.

2. Dispositif selon la revendication 1, **caractérisé en ce que** le corps de réservoir (42) qui est au moins prévu est extrudé.

3. Dispositif selon la revendication 1 ou 2, **caractérisé en ce que** le bloc fonctionnel (16) renferme un dispositif de commande (25 ; 27 ; 28).

4. Dispositif selon l'une des revendications 1 à 3, **caractérisé en ce que** le bloc fonctionnel (16) présente un raccord d'entrée de gaz (20) et **en ce qu'**un premier filtre (12) est fixé au bloc fonctionnel (16), qui est relié au raccord d'entrée de gaz par l'intermédiaire d'une conduite de raccordement (17) située dans le bloc fonctionnel.

5. Dispositif selon l'une des revendications 1 à 4, **caractérisé en ce que** le bloc fonctionnel (16) présente un raccord de sortie de gaz (21) et **en ce qu'**un deuxième filtre (14) est fixé au bloc fonctionnel (16), qui est relié au raccord de sortie de gaz par l'intermédiaire d'une conduite de raccordement (17) située dans le bloc fonctionnel.

6. Dispositif selon la revendication 4 ou 5, **caractérisé en ce que** le filtre (12, 14) est raccordé à une conduite d'évacuation des résidus de filtration (18) qui mène au bloc fonctionnel.

7. Dispositif selon la revendication 6, **caractérisé en ce que** le bloc fonctionnel (16) contient un dispositif d'évacuation (30 ; 31) pouvant être fermé auquel est raccordée la conduite d'évacuation des résidus de filtration (18).

8. Dispositif selon les revendications 4 et 5, **caractérisé en ce que** le premier filtre (12) et le deuxième filtre (14) sont fixés sur deux faces extérieures opposées du bloc fonctionnel (16), le premier filtre (12), de préférence au bas du bloc fonctionnel (16) et le deuxième filtre (14), de préférence en haut.

9. Dispositif selon l'une des revendications 1 à 8, **caractérisé en ce que** le bloc fonctionnel (16) présente au moins un composant moulé (35) avec des évidements semblables à des canaux (32, 36), **en ce que** le composant moulé à canaux (35) présente au moins un capteur de valeurs de mesure (26), et **en ce que** le capteur de valeurs de mesure (26) agit à distance sur une platine de commande de soupape (24), notamment par le biais d'un aimant mobile et d'un capteur de champ magnétique.

10. Dispositif selon la revendication 9, **caractérisé en ce que** le capteur de valeurs de mesure (26) et la platine de commande de la soupape (24) sont intégrés dans le composant moulé à canaux (35) de telle manière qu'ils se font face sans se toucher.

11. Dispositif selon la revendication 9 ou 10, **caractérisé en ce que** le capteur de valeurs de mesure (26 ; 52, 53, 57) est mis en circuit en tant qu'indicateur de pression différentielle.

12. Dispositif selon la revendication 9, 10, ou 11, **caractérisé en ce que** la platine de commande de soupape (24) est mise en circuit dans le composant moulé à canaux (35) de telle manière qu'elle commande une soupape à membrane (8).

13. Dispositif selon la revendication 12, **caractérisé en ce que** la soupape à membrane (8) est intégrée dans le composant moulé à canaux (35).

14. Dispositif selon l'une des revendications précédentes, **caractérisé en ce qu'**au moins deux capteurs de valeurs de mesure et trois électrovannes (28) sur lesquelles sont fixées les platines de commande de soupape (24) sont intégrés dans le bloc fonctionnel (16).

15. Dispositif selon l'une des revendications 1 à 14, **caractérisé en ce qu'**au niveau de l'entrée de gaz (3), les deux réservoirs (1, 2) peuvent être fermés tous les deux par une seule et même soupape de sortie ou chacun par une soupape de sortie à commande électronique (8, 9) différente pour empêcher la sortie du flux secondaire (11).

16. Dispositif selon la revendication 15, **caractérisé en ce que** la ou les soupape(s) de sortie à commande électronique (8, 9) présente(nt) une platine de commande de soupape (24) qui est fixée à la soupape de sortie (8, 9).

17. Dispositif selon l'une des revendications 1 à 16, **caractérisé en ce que** la paire (43) de réservoirs (1, 2) qui est au moins prévue est reliée au bloc fonctionnel (16) par un système de quatre bus (40 ; 41), deux bus (40) faisant partie de l'entrée de gaz (3) et les deux autres (41), de la sortie de gaz (6), dont un (40 ; 41) est chaque fois relié au premier réservoir (1) et un autre (40 ; 41), au second réservoir.

18. Dispositif selon l'une des revendications précédentes comprenant un dispositif de vérification du fonctionnement intégré dans une installation de séchage par adsorption commandée par un processeur dans laquelle la régénération s'effectue au moyen d'un flux de gaz de régénération, sachant que
- au moins un capteur de valeurs de mesure (52, 53, 54, 55) est prévu, qui permet de relever une valeur de mesure en fonction du flux de gaz de régénération,
- un processeur (27) destiné à relever et à traiter un signal de valeur de mesure donné par le capteur de valeurs de mesure est prévu,
- une mémoire (51) pour stocker au moins un domaine de consigne pour la valeur de mesure est prévue,
- le processeur (27) et la mémoire (51) sont reliés entre eux de telle sorte qu'il est possible d'établir une comparaison entre la valeur de mesure et le domaine de consigne, et que
- un affichage (23) est relié au processeur (27), qui peut être commandé par le processeur (27) lorsqu'une valeur de mesure se situe en dehors du domaine de consigne.

19. Dispositif comprenant un dispositif de vérification du fonctionnement intégré dans une installation de séchage par adsorption selon la revendication 18, **caractérisé en ce que** le capteur de valeurs de mesure (52, 53, 54, 55) est un capteur de la pression mesurée.

20. Dispositif comprenant un dispositif de vérification du fonctionnement intégré dans une installation de séchage par adsorption selon l'une des revendications précédentes, **caractérisé en ce qu'**est prévu en tant que capteur de valeurs de mesure (52, 53, 54, 55) un capteur de flux massiques située de préférence à proximité d'une sortie (11, 21).

21. Dispositif comprenant un dispositif de vérification du fonctionnement intégré dans une installation de séchage par adsorption selon l'une des revendications précédentes, **caractérisé en ce que** le processeur (27) présente une commande pour l'installation de séchage par adsorption qui réagit lorsqu'une valeur de mesure se situe en dehors du domaine de consigne prédéfini.

22. Dispositif comprenant un dispositif de vérification du fonctionnement intégré dans une installation de séchage par adsorption selon l'une des revendications précédentes, **caractérisé en ce que** ledit dispositif de vérification du fonctionnement présente un capteur (56) destiné à relever un paramètre de fonctionnement, sachant que le capteur (56) est relié au processeur (27) et/ou à la mémoire (51).

23. Dispositif comprenant un dispositif de vérification du fonctionnement intégré dans une installation de séchage par adsorption selon l'une des revendications précédentes, **caractérisé en ce que** la mémoire (51) présente un raccordement (50) pour une unité de saisie destinée à mettre en mémoire des domaines de consigne en fonction d'au moins un paramètre de fonctionnement de l'installation de séchage par adsorption.

24. Dispositif comprenant un dispositif de vérification du fonctionnement intégré dans une installation de séchage par adsorption selon l'une des revendications précédentes, **caractérisé en ce que** le capteur de valeurs de mesure, la mémoire et le processeur sont intégrés dans un bloc fonctionnel d'un dispositif selon l'une des revendications 1 à 17.

25. Dispositif comprenant un dispositif de vérification du fonctionnement intégré dans une installation de séchage par adsorption selon l'une des revendications précédentes, **caractérisé en ce que** le dispositif de vérification est un équipement complémentaire de l'installation de séchage par adsorption.

26. Dispositif comprenant un dispositif de vérification du fonctionnement intégré dans une installation de séchage par adsorption selon l'une des revendications précédentes, **caractérisé en ce que** l'installation de séchage par adsorption présente une commande dans laquelle est intégrée un procédé selon l'une des revendications suivantes 27 à 38.

27. Procédé pour fractionner par adsorption un gaz en continu avec vérification du bon fonctionnement d'une installation de séchage par adsorption selon l'une des revendications précédentes, selon lequel la régénération s'effectue par le biais d'un flux de gaz de régénération, et comprenant les étapes suivantes :
- on relève une valeur de mesure qui a une relation fonctionnelle avec le flux de gaz de régénération,
- le processeur effectue une comparaison pour vérifier que la valeur de mesure se situe dans un domaine de consigne prédéfini pour la valeur de mesure et
- déclenche un signal si la valeur de mesure se situe en dehors du domaine de consigne.

28. Procédé selon la revendication 27, **caractérisé en ce que** la valeur de mesure est une valeur de mesure qui a une relation fonctionnelle avec un flux de gaz d'adsorption et de laquelle il est possible de déduire le volume du flux de gaz de régénération associé.

29. Procédé selon la revendication 27 ou 28, **caractérisé en ce que** la valeur de mesure et/ou l'évolution dans le temps de la valeur de mesure est relevée en étant associée dans le temps à une ouverture ou fermeture d'une soupape (4, 5, 8, 9) de l'installation de séchage par adsorption.

30. Procédé selon l'une des revendications 27 à 29, **caractérisé en ce qu'**une première et une seconde valeur de mesure sont relevées sucessivement et mises en rapport l'une avec l'autre, sachant que la seconde valeur de mesure est basée sur au moins un paramètre qui n'est pas le même pour la première valeur de mesure.

31. Procédé selon la revendication 30, **caractérisé en ce que** l'on procède à une vérification fonctionnelle à partir d'une relation existant entre la première valeur de mesure, la seconde valeur de mesure et le paramètre.

32. Procédé selon l'une des revendications 27 à 31, **caractérisé en ce que** le domaine de consigne prédéfini pour la valeur de mesure est mémorisé, de préférence en tant que fonction d'au moins un paramètre de fonctionnement de l'installation de séchage par adsorption.

33. Procédé selon l'une des revendications 27 à 32, **caractérisé en ce que** le domaine de consigne est choisi en fonction d'un paramètre de fonctionnement de l'installation de séchage par adsorption parmi un certain nombre de domaines de consigne mémorisés.

34. Procédé selon la revendication 32 ou 33, **caractérisé en ce que** lé paramètre de fonctionnement est relevé par au moins un capteur (56) au moins pendant le fonctionnement de l'installation de séchage par adsorption.

35. Procédé selon la revendication 32, 33 ou 34, **caractérisé en ce que** le domaine de consigne associé au paramètre de fonctionnement est choisi par le processeur, sachant que, de préférence pendant le fonctionnement de l'installation de séchage par adsorption, ce choix est au moins vérifié de temps en temps et éventuellement adapté.

36. Procédé selon l'une des revendications 27 à 35, **caractérisé en ce que**, lorsqu'une valeur de mesure se situe en dehors du domaine de consigne, le processeur (27) déduit une source d'erreur à partir de tolérances prédéfinies.

37. Procédé selon l'une des revendications 27 à 36, **caractérisé en ce que** la succession dans le temps des valeurs de mesure est analysée et extrapolée pour déterminer le comportement futur de l'installation de séchage par adsorption.

38. Procédé selon l'une des revendications 27 à 37, **caractérisé en ce que**, pour une valeur de mesure située en dehors du domaine de consigne, on modifie au moins un paramètre de fonctionnement de l'installation de séchage par adsorption, une durée d'adsorption et/ou de régénération pour le premier et/ou le deuxième réservoir (1, 2), notamment en prenant en compte des données mémorisées issues d'une matrice de valeurs empiriques.
